# EUROPÄISCHE PATENTSCHRIFT

(11) **EP 4 108 430 B1**
(45) Veröffentlichungstag und Bekanntmachung des Hinweises auf die Patenterteilung: **04.06.2025**
(21) Anmeldenummer: 21181453.8
(22) Anmeldetag: 24.06.2021
(51) Int. Cl.: B29C 70/24, B62D 47/02, B61D 17/22, B60D 5/00, B32B 5/02, B32B 5/10, B29C 70/54, B29C 70/46, B29C 70/56, B29C 53/24, B29C 70/68, D03D 11/02, B32B 5/08, B32B 5/12, B29D 22/02, B29L 31/00

(54) **VERFAHREN ZUR HERSTELLUNG EINES ABDECKUNGSWANDUNGSABSCHNITTS EINER FLEXIBLEN ABDECKUNG, SOWIE ABDECKUNG MIT EINER ABDECKUNGSWANDUNG AUS ZUMINDEST EINEM MITTELS DES VERFAHRENS HERGESTELLTEN ABDECKUNGSWANDUNGSABSCHNITT**
METHOD FOR PRODUCING A COVERING WALL SECTION OF A FLEXIBLE COVER, AND COVER WITH A COVERING WALL CONSISTING OF AT LEAST ONE COVERING WALL SECTION PRODUCED BY MEANS OF THE METHOD
PROCÉDÉ DE FABRICATION D'UNE SECTION DE PAROI DE RECOUVREMENT D'UN RECOUVREMENT FLEXIBLE, AINSI QUE RECOUVREMENT DOTÉ D'UNE PAROI DE RECOUVREMENT COMPOSÉE DE L'AU MOINS UNE SECTION DE PAROI DE RECOUVREMENT FABRIQUÉE SELON LE PROCÉDÉ

(43) Veröffentlichungstag der Anmeldung: 28.12.2022
(73) Patentinhaber: Hübner GmbH & Co. KG, 34123 Kassel (DE)
(72) Erfinder: Wiegrefe, Andreas, 36039 Fulda (DE); Hübner, Reinhard, 34130 Kassel (DE); Hierling, Christian, 34385 Bad Karlshafen (DE); Kammel, Kathleen, 34225 Baunatal (DE)

(56) Entgegenhaltungen:
- DE-A1- 2 249 488
- DE-C- 593 970
- DE-T2- 69 705 093
- GB-A- 1 298 936
- US-A- 4 905 607
- US-A1- 2012 071 286

## Beschreibung

Die vorliegende Erfindung betrifft ein Formgebungsverfahren zur Herstellung eines Abdeckungswandungsabschnitts sowie eine Abdeckung mit einer Abdeckungswandung aus zumindest einem mittels des Verfahrens hergestellten Abdeckungswandungsabschnitt und ein Verfahren zur Herstellung der Abdeckung.

Die Erfindung betrifft zudem ein Fahrzeug, eine Fluggastbrücke oder -treppe und eine Gebäudeverbindung jeweils mit einer derartigen Abdeckung als Übergangselement.

Bei der flexiblen Abdeckung handelt es sich vorzugsweise um einen Übergangsbalg. Ein gattungsgemäßer Übergangsbalg ist z. B. als Falten- oder Wellenbalg ausgebildet. Der Falten- oder Wellenbalg weist eine Balgwandung mit Falten oder Wellen auf, die einen tunnelartigen bzw. kanalartigen Balginnenraum umgibt. Die Balgwandung besteht aus mindestens einem mehr- schichtigen Flächengebilde, das einen Festigkeitsträger aufweist, der zumindest einseitig, vorzugsweise beidseitig, mit einer Polymerbeschichtung beschichtet ist, wobei der Festigkeitsträger zumindest ein textiles Flächengebilde oder eine Folie o. ä. aufweist.

Bei der Herstellung der einzelnen Falten eines Faltenbalgs werden einzelne Materialstreifen aus dem Material der Balgwandung zieharmonikaartig an einer ihrer aneinander liegenden Längskanten miteinander vernäht. Die andere Längskante, die auch eine Naht, eingepresste Stapel oder anderes mehr enthalten kann, wird mit dem Materialstreifen für eine angrenzende Falte durch einen Balgspannrahmen mit im Wesentlichen U-förmigen Querschnitt eingefasst, insbesondere eingeklemmt oder geklebt oder in einen Klemmrahmen eingepresst. Die Balgspannrahmen sind somit jeweils an den Faltenkanten angeordnet und stabilisieren diese.

Bei der Herstellung der einzelnen Wellen eines Wellenbalgs können in der Regel ebenfalls einzelne Materialstreifen aus dem Material der Balgwandung zur Ausbildung der Wellen an ihren Längskanten miteinander vernäht und/oder durch Aluminiumprofile aufgenommen und mittels dieser eingeklemmt und verbunden werden. Dabei kann eine Welle in Umfangsrichtung gesehen aus einem einzigen oder aus mehreren z. B. miteinander vernähten Materialstreifen bestehen. Die Wellenkontur weist Wellenberge und Wellentäler auf, wobei die Wellen im Bereich der Wellentäler z. B. miteinander vernäht sein können und/oder die im Bereich der Wellentäler aneinander liegenden und miteinander vernähten Längskanten ebenfalls durch U-förmige Balgspannrahmen eingefasst, insbesondere eingeklemmt oder geklebt oder in einen Klemmrahmen eingepresst, sein können.

Der Aufwand zur Herstellung der Falten- oder Wellenbalge ist somit relativ hoch.

Aus der EP 0 922 621 A1 ist zudem ein Balg oder Teil eines Balges bekannt, wobei in einer Elastormerschicht eine textile Einlage einvulkanisiert ist und wobei der Balg als Wellen- oder Faltenbalg oder eines Teiles davon ausgebildet ist und die Wellen oder Falten in ihrer Wölbung einteilig ausgebildet sind, und wobei die textile Einlage als Maschenware ausgebildet ist.

Gemäß der EP 0 922 621 A1 können zudem mittels einer entsprechenden Form Seitenwände, Boden- oder Deckenabschnitte des Balgs mit mehreren hintereinander angeordneten Falten oder Wellen hergestellt werden. Bzw. bei entsprechend großer Form besteht die Möglichkeit, ganze Bälge bzw. Balg- hälften herzustellen. Vorteilhaft bei nach einem solchen Prinzip einteilig hergestellter Balge bzw. Balgabschnitte ist, dass diese auch eine hohe Haltbarkeit aufweisen, was daraus resultiert, dass die Oberfläche der Bauteile absolut eben gehalten werden kann.

Die Herstellung kann dadurch erfolgen, dass in eine Form mit einer Falten- oder Wellenkontur eine Elastomerschicht eingelegt wird, auf die Elastomer- schicht eine Schicht einer Maschenware und auf diese Maschenware eine weitere Elastomerschicht eingelegt wird, wobei die Verbindung der Elastomerschichten untereinander und mit der Maschenware durch Vulkanisation bewerkstelligt wird.

Des Weiteren ist es auch bekannt, dass der Übergangsbalg bzw. dessen Wandung auch ungewellt und ohne Falten ausgebildet ist. In diesem Fall ist die Wandung entsprechend elastisch ausgebildet. Dies ist beispielsweise in der deutschen Patentanmeldung DE 10 2011 107 370 A1 offenbart.

Die US 4 905 607 A offenbart einen gattungsgemäßen Übergangsboden mit starren Stäben. Der Übergangsboden wird unter Verwendung einer gewölbten Form hergestellt. Dazu werden zwei mit einem Elastomer beschichtete flächige Festigkeitsträger und die starren Stäbe in der Form platziert und anschließend ein Elastomermaterial zur Bildung einer Abdeckung auf den starren Stäben darauf gegeben und alles ausgehärtet.

Die DE 697 05 093 T2 offenbart einen Faltenbalg für Übergangseinrichtungen für Eisenbahnen und ein Verfahren zur Herstellung des Faltenbalgs. Gemäß der DE 697 05 093 T2 besteht der Balg aus einer Mehrzahl von untereinander verbundenen, jeweils flächigen Modulen, welche untereinander durch Vulkanisation verbunden sind.

Die DE 593 970 C offenbart einen Verbindungsbalg für Eisenbahnwagen, bestehend aus einer Webstoffseele und Kautschuk mit Metallversteifungen, wobei Webstoffseele und Metallversteifungen vollständig in eine ununterbrochene, aufgeformte Kautschukmasse eingebettet sind. Des Weiteren erfolgt die Herstellung gemäß der DE 593 970 dadurch, dass die Webstoffseele mit ihren Falten auf eine Form gebracht wird, auf welcher in warmem Zustand Kautschuk derart aufgebracht wird, dass eine kontinuierliche Kautschukmasse entsteht, die eine bestimmte Wandstärke hat und den Falten folgt, und in welche die Tuchseele und die Stangen oder Rahmen eingebettet sind, und ein homogenes Ganzes erzielt wird.

Die US 2012/0071286 A1 und die DE 2 249 488 A1 offenbaren jeweils einen Zahnriemen und ein Verfahren zur Herstellung des Zahnriemens.

Die GB 1 298 936 A befasst sich mit einem Förderband.

Aufgabe der vorliegenden Erfindung ist die Bereitstellung eines einfachen und kostengünstigen Formgebungsverfahrens zur Herstellung eines qualitativ hochwertigen Abdeckungswandungsabschnitts für eine flexible Abdeckung.

Weitere Aufgabe ist die Bereitstellung einer Abdeckung mit einer derartigen Abdeckungswandung und eines Verfahrens zur Herstellung der Abdeckung.

Zudem sollen ein Fahrzeug, eine Fluggastbrücke oder -treppe und eine Gebäudeverbindung jeweils mit einer derartigen Abdeckung als Übergangselement bereitgestellt werden

Diese Aufgaben werden durch ein Verfahren mit den Merkmalen von Anspruch 1 und eine Abdeckung mit den Merkmalen von Anspruch 12 sowie ein Verfahren zur Herstellung der Abdeckung mit den Merkmalen von Anspruch 14, ein Fahrzeug mit den Merkmalen von Anspruch 15, eine Fluggastbrücke oder -treppe mit den Merkmalen von Anspruch 16 und eine Gebäudeverbindung mit den Merkmalen von Anspruch 17 gelöst. Vorteilhafte Weiterbildungen der Erfindung sind in den sich jeweils anschließenden Unteransprüchen gekennzeichnet.

Im Folgenden wird die Erfindung anhand einer Zeichnung beispielhaft näher erläutert. Es zeigen:
- Figur 1:: Schematisch eine perspektivische Ansicht einer Abdeckung in Form eines Faltenbalges
- Figur 2:: Stark vereinfacht und sehr schematisch einen Querschnitt eines erfindungsgemäß hergestellten Abdeckungswandungsabschnitts mit Faltenkontur
- Figur 3:: Stark vereinfacht und sehr schematisch einen Querschnitt eines erfindungsgemäß hergestellten Abdeckungswandungsabschnitts mit Wellenkontur
- Figur 4:: Stark vereinfacht und sehr schematisch eine querschnittsartige Ansicht eines Flächengebildes mit einem Trägergewebe mit einem Kanal und Verstärkungskettfäden
- Figur 5:: Schematisch eine Draufsicht auf ein Trägergewebe des Flächengebildes gemäß einer Ausführungsform mit Verstärkungskettfäden und Verstärkungsschussfäden
- Figur 6:: Vereinfacht eine perspektivische Ansicht einer vorzugsweise verwendeten Form
- Figur 7:: Einen Querschnitt durch die Form gemäß Figur 6
- Figur 8:: Eine Draufsicht auf die Form gemäß Figur 6
- Figur 9:: Schematisch eine Seitenansicht eines Übergangs von zwei Fahrzeugteilen mit einem Übergangsbalg in Form eines Faltenbalges

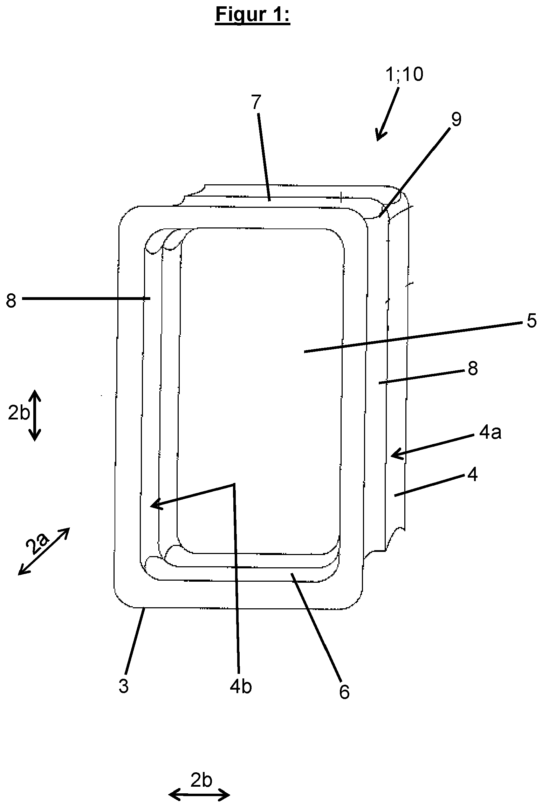

Die erfindungsgemäße Abdeckung 1 (Fig. 1) weist eine Abdeckungslängsrichtung 2a sowie eine dazu senkrechte Abdeckungsumfangsrichtung 2b auf. Zudem weist die Abdeckung 1 mehrere, in Abdeckungslängsrichtung 2a voneinander beabstandete, umlaufende bzw. sich in Abdeckungsumfangsrichtung 2b erstreckende Abdeckungsspannrahmen 3 sowie eine in die Abdeckungsspannrahmen 3 eingespannte bzw. durch diese aufgespannte Abdeckungswandung 4 auf. Die Abdeckungswandung 4 umgibt einen tunnelartigen bzw. kanalartigen Abdeckungsinnenraum 5. Zudem weist die Abdeckungswandung 4 eine Abdeckungswandungsaußenseite 4a und eine Abdeckungswandungsinnenseite 4b auf. Die Abdeckungswandung 4 kann, wie in Fig. 1 dargestellt, umlaufend vollständig geschlossen sein. Sie kann in Umfangsrichtung aber auch teilweise offen sein und z. B. einen U-förmigen Querschnitt aufweisen.

Des Weiteren sind die Abdeckungsspannrahmen 3 vorzugsweise jeweils im Wesentlichen rechteckig ausgebildet. Infolgedessen weist die Abdeckung 1 vorzugsweise einen im Wesentlichen rechteckigen Querschnitt auf bzw. ist kastenförmig ausgebildet. Die Abdeckungsspannrahmen 3 können jedoch auch jedwede andere Form aufweisen, z. B. können sie - zumindest bereichsweise - gerundet und/oder leicht geschwungen ausgebildet sein. Zudem weist die Abdeckungswandung 4 einen, bevorzugt horizontalen, Abdeckungsboden 6, ein, bevorzugt horizontales, Abdeckungsdach 7, und zwei, bevorzugt vertikale, Abdeckungsseitenwände 8 auf. Der Abdeckungsboden 6 und das Abdeckungsdach 7 gehen jeweils über Abdeckungswandeckbereiche 9 in die Abdeckungsseitenwände 8 über.

Die Abdeckung 1 ist vorzugsweise ein Balg mit Balgdach, Balgseitenwänden und Balgboden. Die Abdeckungslängsrichtung 2a entspricht somit in diesem Fall einer Balglängsrichtung. Die Abdeckungsspannrahmen 3 sind Balgspannrahmen und die Abdeckungswandung 4 ist eine Balgwandung mit Balgwandungsaußenseite und eine Balgwandungsinnenseite usw.

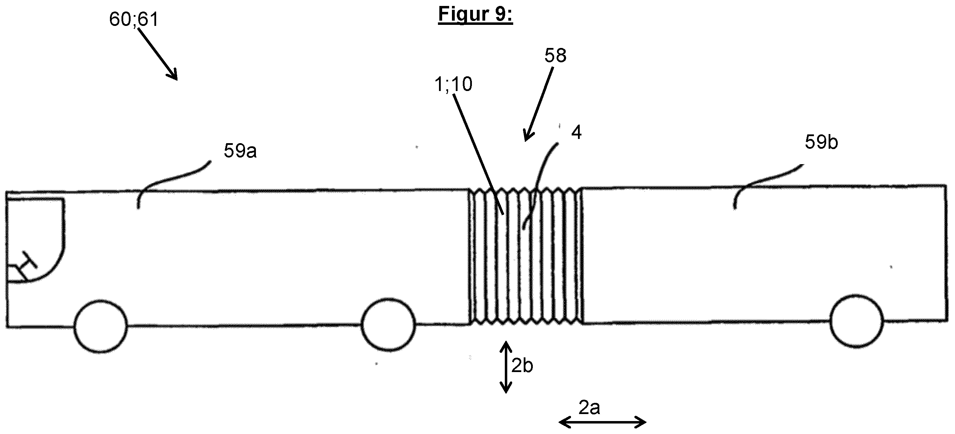

Bei dem Balg handelt es sich vorzugsweise um einen Wellen- oder Faltenbalg 10 (Fig. 1 bzw. 9).

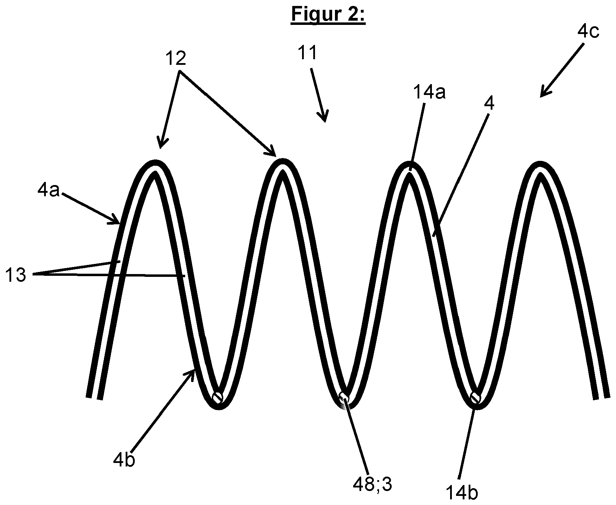

Beim Faltenbalg 10 ist die Abdeckungswandung 4 in an sich bekannter Weise ziehharmonikaartig ausgebildet und weist eine Faltenkontur 11 mit Falten 12 auf (Fig. 2). Die Falten 12 weisen jeweils Faltenflanken 13 auf, die jeweils paarweise über sich abwechselnde erste bzw. innere und zweite bzw. äußere Faltenkanten 14a;b ineinander übergehen. Zudem sind die Falten 12 in Abdeckungslängsrichtung 2a zueinander benachbart angeordnet.

An zumindest einem Teil der Faltenkanten 14a;b ist die Abdeckungswandung 4 zudem jeweils in einen Abdeckungsspannrahmen 3 eingespannt.

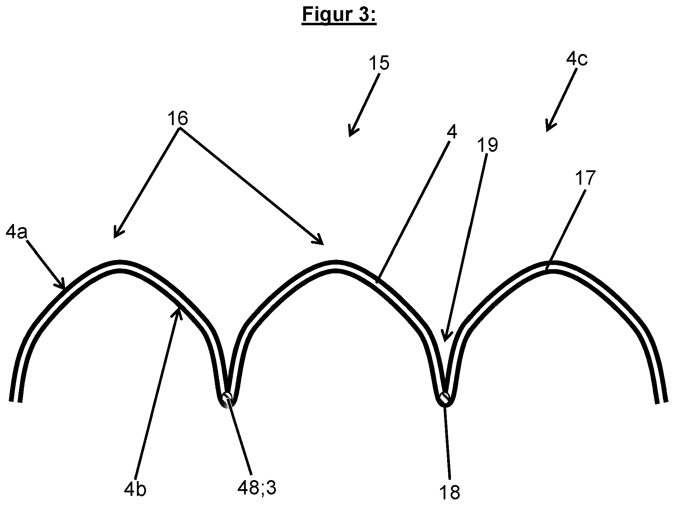

Im Fall des Wellenbalgs 10 weist die Abdeckungswandung 4 in an sich bekannter Weise eine Wellenkontur 15 mit Wellen 16 auf (Fig. 3). Die einzelnen Wellen 16 weisen jeweils einen U-förmigen Querschnitt auf. Die Wellen 16 sind ebenfalls in Abdeckungslängsrichtung 2a zueinander benachbart angeordnet. Zudem weisen die Wellen 16 jeweils einen abgerundeten Wellenscheitel 17 auf. Die einzelnen zueinander benachbarten Wellen 16 gehen zudem jeweils über eine innere Wellenkante 18 ineinander über. Zwischen zueinander benachbarten Wellen 16 ist zudem von der Abdeckungswandungsaußenseite 4a aus gesehen ein Wellental 19 vorhanden.

An zumindest einem Teil der inneren Wellenkanten 18 ist die Abdeckungswandung 4 zudem jeweils in einen Abdeckungsspannrahmen 3 eingespannt.

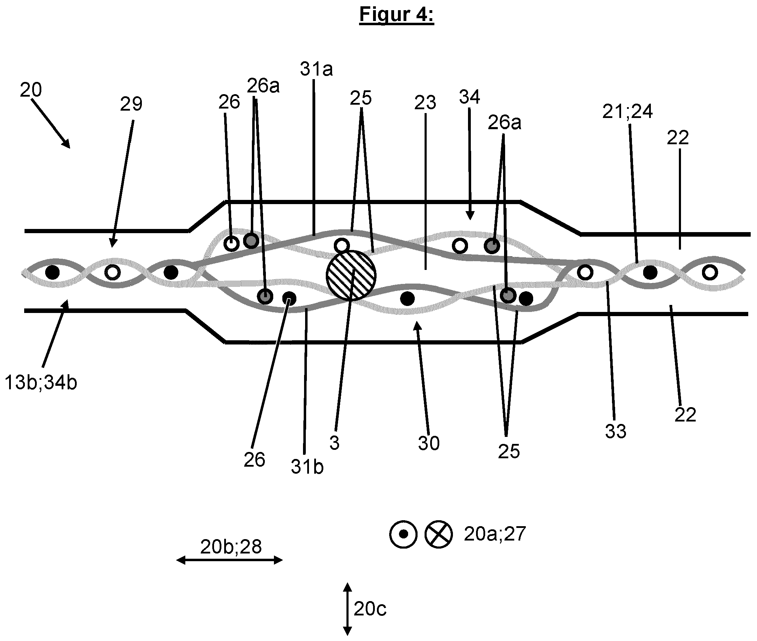

Wie ebenfalls an sich bekannt, besteht die Abdeckungswandung 4 aus einem mehrschichtigen Flächengebilde 20 (Fig. 4). Das mehrschichtige, flexible Flächengebilde 20 weist eine mittige, flächige Festigkeitsträgerschicht bzw. einen mittigen flächigen Festigkeitsträger 21 auf, der beidseitig eine äußere bzw. außenseitige Polymerbeschichtung 22 aufweist. Die Polymerbeschichtung 22 bildet jeweils die Außenseite des mehrschichtigen Flächengebildes 20.

Das mehrschichtige Flächengebilde 20 weist zudem eine erste Raumrichtung bzw. Flächenrichtung 20a sowie eine dazu senkrechte zweite Raumrichtung bzw. Flächenrichtung 20b auf. Bzw. das mehrschichtige Flächengebilde 20 weist eine flächenmäßige Erstreckung in die erste und zweite Flächenrichtung 20a;b auf. Zudem weist das Flächengebilde 20 eine Dickenrichtung bzw. Höhenrichtung 20c auf, welche senkrecht zu den beiden Flächenrichtungen 20a;b ist. Der flächige Festigkeitsträger 21 weist folglich ebenfalls eine flächenmäßige Erstreckung in die erste und zweite Flächenrichtung 20a;b sowie eine höhenmäßige bzw. dickenmäßige Erstreckung in die Dickenrichtung 20c auf.

Die Polymerbeschichtung 22 besteht aus einer Polymermatrix 22, in welche vorzugsweise Füllstoffe, insbesondere flammhemmende Füllstoffe, eingebettet sind. Die Polymermatrix 22 besteht insbesondere aus einem Polymerwerkstoff bzw. Polymer gemäß DIN 7724-1993-04. Vorzugsweise besteht die Polymermatrix 22 aus einem Elastomer gemäß DIN 7724-1993-04. Elastomere sind demnach formfeste, aber elastisch verformbare Polymere, deren Glasübergangspunkt sich unterhalb der Einsatztemperatur befindet. Die Elastomere können sich bei Zug-und Druckbelastung elastisch verformen, finden aber danach wieder in ihre ursprüngliche, unverformte Gestalt zurück. Die Polymermatrix 22 besteht bevorzugt aus vulkanisiertem Kautschuk (Gummi), insbesondere aus vulkanisiertem Silikonkautschuk (Silikongummi) oder vulkanisiertem Naturkautschuk (Naturgummi), oder aus CSM (chlorsulfoniertes Polyethylen) oder EPDM (Ethylen-Propylen-Dien-Kautschuk) oder EVA (Ethylvenylacetat) oder PVC (Polyvinylchlorid) oder aus PU (Polyurethan) oder deren Gemischen.

Gemäß einer bevorzugten Ausführungsform der Erfindung weist das Flächengebilde 20, vorzugsweise der Festigkeitsträger 21, Kanäle 23 zur Aufnahme jeweils zumindest eines Abdeckungsspannrahmens 3 auf.

Die Kanäle 23 können dabei auf unterschiedliche Arten gebildet werden. Vorzugsweise werden die Kanäle gemäß der deutschen Patentanmeldung DE 10 2016 109 070 A1 erzeugt.

Der Festigkeitsträger 21 weist in diesem Fall ein Trägergewebe 24 auf. Das Trägergewebe 24 weist in an sich bekannter Weise sich in die erste Flächenrichtung 20a erstreckende Kettfäden 25 und die Kettfäden 25 kreuzende, sich parallel zur zweiten Flächenrichtung 20b erstreckende Schussfäden 26 auf. Die erste Flächenrichtung 20a entspricht somit einer Kettrichtung 27 und die zweite Flächenrichtung 20b entspricht somit einer Schussrichtung 28 des Trägergewebes 24.

Bei den Kett- und Schussfäden 25;26 handelt es sich vorzugsweise jeweils um Monofilamentfäden oder Multifilamentfäden. Monofilamentfäden bestehen jeweils aus einem einzigen Monofilament. Multifilamentfäden bestehen aus mehreren Monofilamenten. Die Monofilamente können jeweils einstückig (monolithisch) ausgebildet sein oder eine Kern-/Mantelstruktur aufweisen. Dabei kann ein Multifilamentfaden unterschiedliche Monofilamente, z. B. aus unterschiedlichen Materialien, aufweisen. Zudem können die Kett- und Schussfäden 25;26 auch aus Stapelfasergarn, auch mit Filamentkern, oder aus Zwirn daraus oder aus Hybridzwirn bestehen. Hybridzwirne bestehen aus Mono- und Multifilamentfäden.

Gemäß der erfindungsgemäßen Ausführungsform der Abdeckung ist das Trägergewebe 24 nun derart ausgebildet, dass es zumindest einen Kanal bzw. eine Gasse bzw. eine Durchführung 23 aufweist, der bzw. die sich senkrecht zur Höhenrichtung 20c bzw. in zumindest eine der beiden Flächenrichtungen 20a;b durch das Trägergewebe 24 durch erstreckt. Vorzugsweise weist das Trägergewebe 24 mehrere Kanäle 23 auf. Die Kanäle 23 weisen zumindest ein, vorzugsweise zwei, Kanalenden auf, an denen sie jeweils an die Umgebung münden.

Die Kanäle 23 werden durch entsprechende Bindung bzw. Verwebung der Kett-und/oder Schussfäden 25;26 erzeugt (siehe Figur 4).

Selbstverständlich kann die Ausbildung der Kanäle 23 auch durch andere Bindungsarten und Webtechniken sowie andere Gestrickarten und Konfektionstechniken als in Figur 4 dargestellt realisiert werden. Z. B. bei Geweben sollten die Kett- und Schussfäden 25;26 so miteinander verwebt werden, dass aus denselben Kett- und Schussfäden 25;26 bzw. demselben Fadenmaterial sowohl einlagige, kanalfreien Gewebebereiche 29 und zweilagige Gewebebereiche 30 mit zwei jeweils einlagigen, miteinander nicht verbundenen, Gewebelagen 31a;31b gebildet werden.

Des Weiteren liegt es im Rahmen der Erfindung, dass der Festigkeitsträger 21 mehrschichtig ausgebildet ist und aus mehreren textilen Flächengebilden besteht, die jeweils miteinander mittels einer Haftschicht aus einem Polymer verbunden sind. Zumindest eines der textilen Flächengebilde ist das beschriebene Trägergewebe 24. Vorzugsweise besteht der Festigkeitsträger 21 aber aus dem Trägergewebe 24. Des Weiteren kann zwischen der Polymerbeschichtung 22 und dem Festigkeitsträger 21 auch eine Haftschicht, bevorzugt aus einem Polymer, vorhanden sein.

Im Rahmen der Erfindung liegt es selbstverständlich auch, dass die Kanäle 23 im Flächengebilde 20, insbesondere im Festigkeitsträger 21, auf andere Art und Weise ausgebildet sind. Beispielsweise können sie gemäß der EP 2 091 766 A1 ausgebildet sein. Die Balgwandung gemäß der EP 2 091 766 A1 weist eine textile Oberseite und eine textile Unterseite auf, die mit Polfäden miteinander verbunden sind. Beispielsweise weist der Festigkeitsträger ein Abstandsgewebe aus zwei durch die Polfäden miteinander verbundenen Geweben (Doppelgewebe) aufweist. Die Polfäden halten die Ober- und Unterseite bzw. die beiden Gewebe auf Abstand und weisen in axialer Richtung des Balges Abstände zueinander auf, so dass sich Gassen bzw. Kanäle bilden.

Anstelle der Gewebe können selbstverständlich auch andere textile Flächengebilde mittels der Polfäden auf Abstand gehalten werden. Insbesondere kann es sich bei dem textilen Abstandsflächengebilde auch um eine Abstandsmaschenware, bevorzugt ein Abstandsgewirke oder ein Abstandsgestrick, handeln. Zudem können auch unterschiedliche textile Flächengebilde mittels der Polfäden miteinander verbunden werden.

Auch können die Kanäle 23 gemäß der WO 2013/023634 A1 ausgebildet sein. Die WO 2013/023634 A1 offenbart einen Wellenbalg, bei dem die Balgwandung einen Festigkeitsträger aufweist, der zwei Flächengebilde aufweist, die derart miteinander verbunden sind, dass Führungen in Form von Schlaufen gebildet werden. Die Schlaufen dienen zur Aufnahme der Balgrahmen und erleichtern somit die Montage. Sie stellen somit ebenfalls Kanäle dar. Die Flächengebilde sind durch Vernähen, Verwirken, Verstricken, Verschweißen oder Verkleben miteinander verbunden. Bei den Flächengebilden kann es sich um einlagige oder mehrlagige Flächengebilde handeln, die jeweils zumindest ein textiles Flächengebilde aufweisen. Vorzugsweise handelt es sich bei dem textilen Flächengebilde jeweils um ein Gewebe oder Maschenware, bevorzugt ein Gewirke oder ein Gestrick, oder Raschelware.

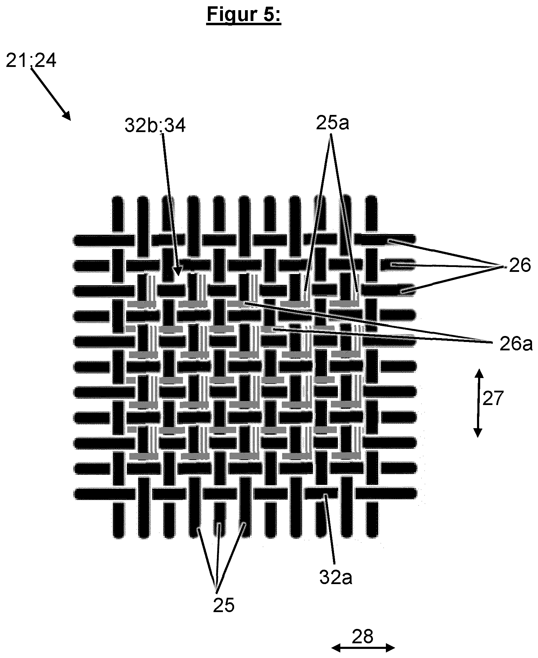

Gemäß einer weiteren vorteilhaften Ausführungsform (Fig. 4, 5) weist das Trägergewebe 24 zudem mindestens zwei Flächenbereiche 32a;b auf, wobei sich die beiden Flächenbereichen 32a;b zumindest in einer mechanischen Eigenschaft voneinander unterscheiden. Vorzugsweise unterscheiden sich die beiden Flächenbereiche 32a;b hinsichtlich zumindest einer mechanischen Festigkeitseigenschaft. Besonders bevorzugt unterscheiden sich die beiden Flächenbereiche 32a;b in zumindest einer Flächenrichtung 20a;b hinsichtlich der Höchstzugkraft F_{H} gemäß DIN EN ISO 13934-1:2013 und/oder der Höchst- zugkraft-Dehnung ε_{H} gemäß DIN EN ISO 13934-1:2013 und/oder des Verhältnisses von Zugkraft gemäß DIN EN ISO 13934-1:2013 zu Dehnung gemäß DIN EN ISO 13934-1:2013.

Insbesondere ist das Trägergewebe 24 gemäß der DE 10 2017 102 626 A1 ausgebildet. Vorzugsweise weist das Trägergewebe 24 beispielsweise ein Grundgewebe 33 und Verstärkungsbereiche 34 auf. Das Grundgewebe 33 wird von den (Grund-)Kettfäden 25 bzw. (Grund-)Schussfäden 26 gebildet. Und im Bereich der Verstärkungsbereiche 34 weist das Trägergewebe 24 mehrere zusätzliche Verstärkungskettfäden 25a und/oder Verstärkungsschussfäden 26a auf, die zusätzlich zu den Grundkettfäden 25 bzw. Grundschussfäden 26 in das Grundgewebe 33 eingewoben bzw. mit diesem verwoben sind. Zusätzlich meint, dass die Verstärkungskettfäden 25a bzw. Verstärkungsschussfäden 26a nicht anstelle der Grundkettfäden 25 bzw. der Grundschussfäden 26 vorhanden sind, sondern zusätzlich zu diesen. Die Kettfaden- dichte bzw. die Schussfadendichte des Trägergewebes 24 ist also in den Verstärkungsbereichen 34 höher als in den nicht verstärkten Bereichen.

Im Rahmen der Erfindung liegt es dabei selbstverständlich auch, dass anstelle des Trägergewebes ein anderes textiles Flächengebilde vorhanden ist, z. B. Maschenware, bevorzugt ein Gestrick oder ein Gewirke, oder ein Vliesstoff mit zumindest zwei sich hinsichtlich zumindest einer mechanischen Eigenschaft unterscheidenden Flächenbereichen. Der Festigkeitsträger kann auch mehrere, auch unterschiedliche, derartige textile Flächengebilde aufweisen.

Die Verstärkungsbereiche 34 werden gezielt dort vorgesehen, wo das Trägergewebe 24 bei der jeweiligen Verwendung und bei der Formgebung stärker belastet wird bzw. wo eine höhere Festigkeit bzw. Steifigkeit erforderlich ist. Beispielsweise ist in den Abdeckungswandeckbereichen 9 der Abdeckungswandung 4 eine geringere Festigkeit bzw. höhere Elastizität bevorzugt. Darauf wird weiter unten noch näher eingegangen.

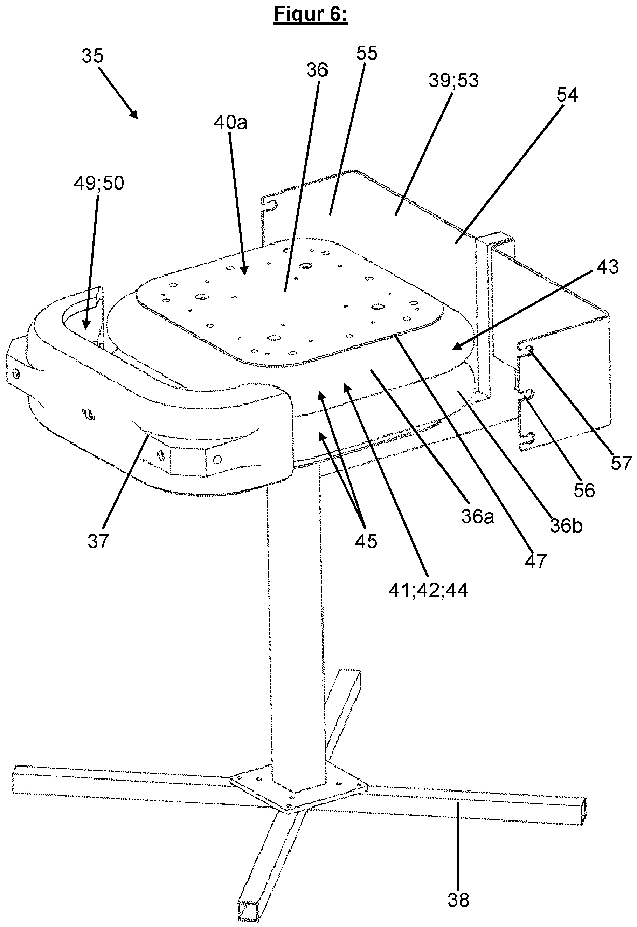

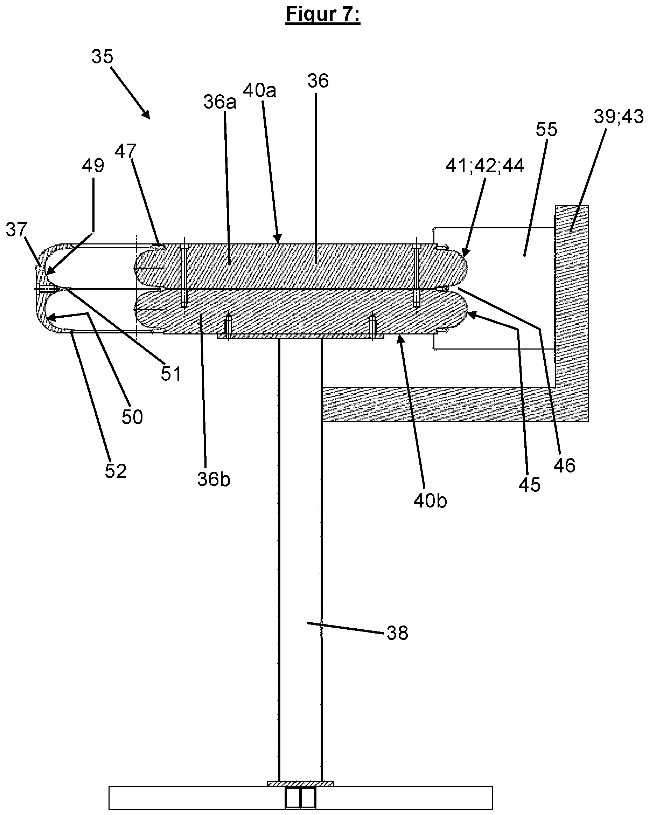

Die Herstellung der Abdeckungswandung 4 mittels des erfindungsgemäßen Verfahrens erfolgt vorzugsweise mittels einer erfindungsgemäßen Formvorrichtung bzw. eines Formwerkzeugs 35 (Fig. 6-8).

Die Formvorrichtung 35 weist eine innere Form 36, vorzugsweise zumindest eine äußere Formschale 37, einen Ständer 38 sowie ein Spannelement- Halteteil 39 auf.

Der Ständer 38 dient zum Aufstellen der Formvorrichtung 35 auf dem jeweiligen Untergrund. Infolgedessen sind sowohl die innere Form 36 als auch das Spannelement-Halteteil 39 an dem Ständer 38 befestigt.

Die innere Form 36 kann quaderförmig ausgebildet sein und weist eine, vorzugsweise ebenflächige, Formoberseite 40a und eine dieser vertikal gegenüberliegende, vorzugsweise ebenflächige, Formunterseite 40b auf. Die innere Form 36 kann aus Metall- oder verstärkten Kunststoffprofilen o. ä. gebildet sein. Des Weiteren weist die innere Form 36 eine umlaufende Formumfangswandung 41 auf. Die Formumfangswandung 41 weist vier Wandungslängsseiten 42 auf, die jeweils paarweise über Wandungseckbereiche 43 ineinander übergehen.

Die Formumfangswandung 41 stellt eine abzuformende Oberfläche 44 bzw. Abformungsoberfläche 44 der Formvorrichtung 35 dar. Die Abformungsoberfläche 44 dient zur Formgebung der Abdeckungswandung 4. Sie weist somit eine der Kontur der herzustellenden Abdeckungswandung 4 entsprechende Formgebungskontur auf. Im vorliegenden Fall dient die Abformungsoberfläche 44 zur Herstellung eine Wellenkontur 15 mit zwei Wellen 16. Zur Herstellung einer Faltenkontur 11 ist die Abformungsoberfläche 44 entsprechend angepasst ausgebildet. Neben der Wellen- oder Faltenkontur sind auch beliebige andere Konturen möglich. Um lediglich ein Beispiel zu nennen, ist z. B. auch eine Rechteckkontur möglich. Die Kontur kann in Umfangsrichtung und/oder in axialer Richtung gleichförmig sein. Sie kann aber auch in Umfangs- und/oder axialer Richtung variieren, z. B. in der Konturtiefe. Darüber hinaus sind Konturen möglich, die Kombinationen aus verschiedenen Grundkonturen, wie einer Wellen-, Falten- und/oder anderen Grundkonturen, sind. Ein weiteres Beispiel ist, dass im Bereich der Längsseiten eine einfache Wellenkontur, in den Eckbereichen aber eine Doppelwellenkontur vorgesehen ist.

Die Formumfangswandung 41 bzw. die Abformungsoberfläche 44 weist insbesondere zwei, insbesondere vertikal, zueinander benachbart angeordnete, jeweils umlaufende, konvexe, nach außen gewölbte Formgebungsabschnitte 45 auf. Die gewölbten Formgebungsabschnitte 45 dienen zur Formgebung bzw. Erzeugung der Wellen 16. Zwischen den beiden gewölbten Formgebungsabschnitten 45 ist eine umlaufende, rinnenartige Vertiefung 46 vorhanden, deren Form der Form eines herzustellenden Wellentals 19 entspricht. Zudem ist benachbart zu jeder der beiden gewölbten Formgebungsabschnitte 45 jeweils eine umlaufende Nut 47 vorhanden. Die eine Nut 47 ist somit zwischen dem oberen gewölbten Formgebungsabschnitt 45 und der Formoberseite 40a an- geordnet und die andere Nut 47 ist zwischen dem unteren gewölbten Formgebungsabschnitt 45 und der Formunterseite 40b angeordnet.

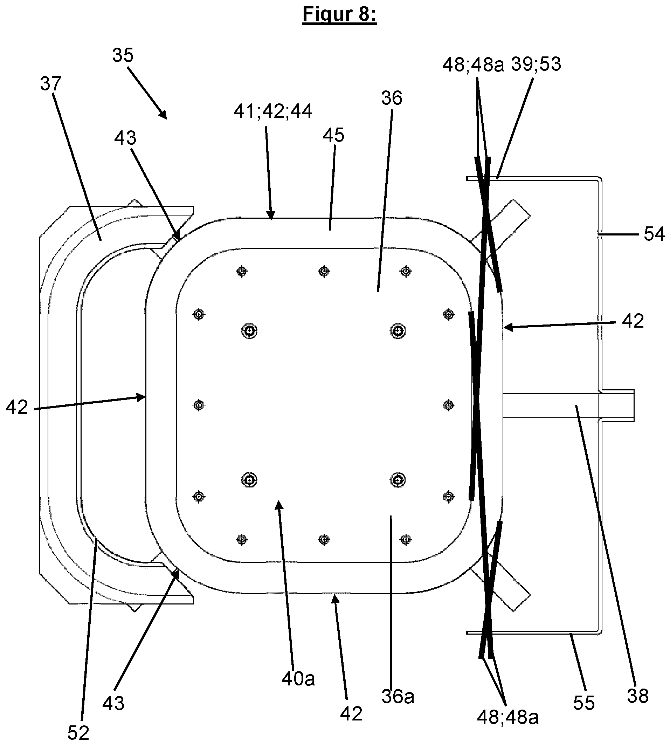

Die Nuten 47 und die Vertiefung 46 dienen erfindungsgemäß zur Aufnahme von Spannelementen 48 (Fig. 8), worauf weiter unten näher eingegangen wird.

Die innere Form 36 kann zum Beispiel mehrteilig ausgebildet sein und vor- zugsweise aus mehreren, z. B. zwei, miteinander lösbar verbundenen, insbesondere miteinander verschraubten, Einzelplatten 36a;b bestehen. Sie kann aber auch anderweitig geteilt ausgebildet sein. Z. B. kann die innere Form 36 auch quer zur Umfangsrichtung in mehrere Segmente geteilt sein, die insbesondere lösbar miteinander verbindbar sind. Die innere Form 36 muss dabei nicht zwingend massiv ausgebildet sein. Vielmehr kann sie beispielsweise auch aus Metallprofilen oder Profilen aus einem Faserverbundmaterial wie GFK ausgebildet sein.

Die äußere Formschale 37, die nicht zwingend vorhanden sein muss, aber die z. B. dann vorgesehen sein kann, wenn eine besonders glatte Oberfläche gewünscht ist, weist eine zur Formgebungskontur 44 der inneren Form 36 korrespondierende Gegenabformungsoberfläche 49 auf. Die äußere Formschale 37 kann ebenfalls mehrteilig ausgebildet sein mit mehreren, insbesondere lös- bar miteinander verbindbaren Segmenten.

Insbesondere weist die Gegenabformungsoberfläche 49 zwei, insbesondere vertikal, zueinander benachbart angeordnete, konkave, nach innen gewölbte, rinnenartige Formgebungsabschnitte 50 zur Formgebung bzw. Erzeugung der Wellen 16 auf. Die rinnenartigen Formgebungsabschnitte 50 sind somit kor- respondierend zu den gewölbten Formgebungsabschnitten 45 der inneren Form 36 ausgebildet.

Zwischen den beiden rinnenartigen Formgebungsabschnitten 50 ist eine längliche, zur Vertiefung 46 der inneren Form 36 korrespondierende Erhebung 51 zur Erzeugung eines Wellentals 19 vorhanden.

Zudem weist die äußere Formschale 37 benachbart zu jeder der beiden rinnenartigen Formgebungsabschnitte 50 jeweils eine Eckkante 52 auf, welche korrespondierend zu jeweils einer der beiden Nuten 47 ausgebildet ist. Die Ecckanten 52 dienen insbesondere zum formschlüssigen Eingreifen in jeweils eine der beiden Nuten 47 während des Formgebungsvorgangs, worauf weiter unten näher eingegangen wird.

Des Weiteren ist die äußere Formschale 37 vorzugsweise U-förmig ausgebildet. Dies dient dazu, damit die äußere Formschale 37 bei der Formgebung jeweils eine der Wandungslängsseiten 42 und die beiden daran angrenzenden Wandungseckbereiche 43 umgreifen kann.

Die äußere Formschale 37 ist relativ zu der inneren Form 36 verschiebbar und insbesondere gegen diese pressbar bzw. mit dieser verspannbar gelagert. Umgekehrt kann auch die innere Form 36 nach Art eines Expansionswerkzeugs gegen eine äußere Formschale 37 pressbar bzw. mit dieser verspannbar gelagert sein.

Die innere Form 36 und/oder die äußere Formschale 37 sind zudem vorzugsweise beheizbar.

Das Spannelement-Halteteil 39 ist gegenüberliegend zur äußeren Formschale 37 angeordnet. Zudem ist es vorzugsweise als Halteblech ausgebildet. Es kann zudem ebenfalls am Ständer 38 befestigt sein.

Das Spannelement-Halteteil 39 ist ebenfalls vorzugsweise U-förmig ausgebildet und weist einen mittigen Halteteilwandungsabschnitt 54 und zwei sich daran anschließende und vorzugsweise rechtwinklig davon abstehende Schenkelwandungen 55 auf. Die Schenkelwandungen 55 weisen jeweils ein angebundenes Ende und ein diesem gegenüberliegendes freies Ende mit einer, vorzugsweise vertikalen, Endkante 56 auf.

Der mittige Halteteilwandungsabschnitt 54 erstreckt sich vorzugsweise ebenfalls parallel zu einer der Wandungslängsseiten 42 und die Schenkelwandungen 55 erstrecken sich auf die innere Form 36 zu. Sie sind benachbart zu jeweils einem der Wandungseckbereiche 43 angeordnet.

Des Weiteren weisen die beiden Schenkelwandungen 55 jeweils drei zueinander benachbart angeordnete Spannelementaufnahmeschlitze 56 auf. Die Spannelementaufnahmeschlitze 56 sind vorzugsweise in vertikaler Richtung übereinander angeordnet. Sie erstrecken sich jeweils von der Endkante 56, vorzugsweise in horizontaler Richtung, in die Schenkelwandung 55 hinein und enden in einem, z. B. verbreiterten, Schlitzende 57.

Anders als in den Figuren dargestellt, können sich die Spannelementaufnahmeschlitze 56 gemäß einer bevorzugten Ausführungsform in Richtung der jeweiligen Schlitzenden 57 auch verjüngen, d. h. die Schlitzbreite der Spannelementaufnahmeschlitzte 56 nimmt zum Schlitzende 57 hin ab. So lassen sich auch Spannelemente 48 verschiedener Dicke gut spannen.

Die Kanten im Bereich der Spannelementaufnahmeschlitze 56 sind vorzugsweise abgerundet, um das Risiko einer Beschädigung der Spannelemente 48 beim Spannen zu minimieren.

Im Folgenden wird nun das erfindungsgemäße Herstellungsverfahren zur Herstellung eines Abdeckungswandungsabschnittes 4c näher erläutert:
Zunächst wird das mehrschichtige textile Flächengebilde 21 hergestellt, indem der Festigkeitsträger 21 zumindest einseitig, vorzugsweise beidseitig mit der Polymerbeschichtung 22 beschichtet wird. Die Beschichtung erfolgt dabei vorzugsweise in an sich bekannter Weise, bevorzugt durch ein Streichverfahren, Kalandrieren, Extrusion, Formpressen, ein Sprühverfahren oder Injection Moulding. Erfindungsgemäß ist es allerdings nicht zwingend, dass die Polymerbeschichtung 22 bereits ausgehärtet, insbesondere vulkanisiert, wird vor der gewünschten Formgebung. Vielmehr kann auch ein vollständig unvulkanisiertes Flächengebilde 20 oder ein lediglich teilvulkanisiertes Flächengebilde 20 bei dem erfindungsgemäßen Verfahren zum Einsatz kommen, welches erst im Rahmen des Formgebungsverfahrens aus- bzw. teilausgehärtet, insbesondere aus- bzw. teilvulkansiert wird.

In die so hergestellte Abdeckungswandungsmaterialbahn aus dem mehrschichtigen Flächengebilde 20 werden anschließend die Spannelemente 48 in die Kanäle 23 eingeführt.

Alternativ können die Spannelemente 48 auch schon vor der Beschichtung in die Kanäle 23 eingeführt werden. Dadurch lassen sich die Spannelemente 48 u. U. besonders leicht in die Kanäle 23 einführen, da der Festigkeitsträger 21 vor dem Beschichten üblicherweise eine höhere Flexibilität aufweist als nach dem Beschichten und/oder die Gefahr von Verengungen der Kanäle 23 z. B. durch das Eindringen von Polymer beim Beschichten verringert ist. Z. B. können die Spannelemente 48 direkt beim Weben des Festigkeitsträgers 21 in die dabei erzeugten Kanäle 23 eingelegt werden. Alternativ können die Spannelemente nach dem Fertigstellen des Festigkeitsträgers 21, aber vor dem Beschichten in die Kanäle 23 eingeführt werden.

Bei den länglichen Spannelementen 48 handelt es sich erfindungsgemäß um flexible, biegsame Spannelemente 48, bevorzugt um Spannseile oder Spannschläuche. Die Spannelemente 48 sind also erfindungsgemäß schlaff bzw. biegeweich.

Insbesondere handelt es sich bei den Spannelementen 48 vorzugsweise um Wellrohrschläuche, welche sich - ohne abzuknicken - gut biegen lassen. Diese sind vorzugsweise ergänzend umflochten, so dass die Spannelemente 48 eine im Wesentlichen glatte äußere Mantelfläche aufweisen und sich somit leichtgängig in die Kanäle 23 einschieben lassen.

Vorzugsweise sind die Spannelemente 48 zudem derart ausgebildet, dass sie durch Erwärmen aushärtbar sind. Sie können also durch Erwärmen von ihrem flexiblen bzw. biegeweichen Zustand in einen ausgehärteten, formstabilen Zustand überführt werden. Es können auch andere Prozesse zum Aushärten der Spannelemente 48 zum Einsatz kommen. So ist grundsätzlich jede Art von physikalischem oder chemischem Aushärten geeignet. Z. B. kann alternativ oder kumulativ zum Aushärten durch Erwärmen auch ein Aushärten durch ei- ne chemische Reaktion genutzt werden. Das Aushärten muss dabei nicht vollständig erfolgen, sondern unter Aushärten wird auch ein Teilaushärten verstanden.

Beispielsweise handelt es sich bei den biegeweichen, nicht formstabilen Spannelementen 48 um Spannschläuche, die mit einem wärmehärtbaren oder durch eine chemische Reaktion härtbaren Material befüllt sind. Die Spannschläuche können dabei bereits befüllt in die Kanäle 23 eingeführt werden oder sie können unbefüllt in die Kanäle 23 eingeführt und anschließend z. B. mittels eines Vakuumverfahrens befüllt werden. Alternativ kann es sich um Spannseile, z. B. auf Glas-, Polyester- oder Naturfaserbasis, handeln, die mit einem wärmehärtbaren oder durch eine chemische Reaktion härtbaren Material getränkt sind. Gemäß einer weiteren Ausführungsform können die Spannelemente aus einem Material hergestellt sein, welches zunächst eine flexible Verformung erlaubt, aber z. B. durch Wärmeeinfluss oder sonstige chemische oder physikalische Behandlung ausgehärtet werden kann. Darüber hinaus können die Spannelemente nach Art eines Schrumpfschlauchs ausgebildet sein, welche durch Wärmeeinfluss oder sonstige chemische oder physikalische Behandlung zusammenschrumpfen und infolge des Schrumpfprozesses zum nötigen Druck zum Spannen des Flächengebildes 20 gegen die Abformungsoberfläche 44 beitragen.

Bei dem wärmehärtbaren Material handelt es sich vorzugsweise um ein wärmehärtendes Polymer. Bevorzugt handelt es sich um einen Duroplast, wie ein Epoxidharz und/oder Phenolharz, und/oder ein thermoplatisches Polymer oder eine hochshorige Elastomermischung.

Alternativ zu einem wärmehärtbaren Material kann ein 2-Komponenten- System mit einem Binder und einem Härter zum Einsatz kommen, um die Spannelemente 48 in den ausgehärteten, formstabilen Zustand zu überführen.

Nach dem Einführen der Spannelemente 48 wird das Flächengebilde 20 mitsamt der Spannelemente 48 auf der Abformungsoberfläche 44 der inneren Form 36 drapiert. Die an der Abformungsoberfläche 44 anliegende Oberseite des Flächengebildes 20 bildet später die Abdeckungswandungsinnenseite 4b.

Insbesondere wird das Flächengebilde 20 auf der zur Formschale 37 hin weisenden Wandungslängsseite 42 und auf den sich an diese Wandungslängsseite 42 anschließenden beiden Wandungseckbereichen 43 drapiert.

Vorzugsweise ist das Flächengebilde 20 dabei im Bereich der Wandungslängsseite 42 verstärkt und im Bereich der beiden Wandungseckbereiche 43 höher elastisch. Das Flächengebilde 20 weist also vorzugsweise im Bereich der Wandungslängsseite 42 eine geringere Höchstzugkraft-Dehnung ε_{H} gemäß DIN EN ISO 13934-1:2013 auf als in den beiden Wandungseckbereichen 43. Eine hohe Flexibilität des Flächengebildes 20 im Bereich der Wandungseckbereiche 43 ist für eine gute Ausformung vorteilhaft. Eine geringe Höchstzugkraft-Dehnung ε_{H} im Bereich der Wandungslängsseite 42 macht diese steifer und verleiht der Abdeckung 1, insbesondere dem Balg, Stabilität.

Anschließend wird das Flächengebilde 20 erfindungsgemäß mittels der Spannelemente 48 an der inneren Form 36 fixiert und gegen die Abformungsoberfläche 44 gespannt (Fig. 8).

Dazu werden die Spannelemente 48 um die Abformungsoberfläche 44 herum gespannt und zwar vorzugsweise derart, dass ein Spannelement 48 in der rinnenartigen Vertiefung 46 angeordnet ist und jeweils ein Spannelement 48 in einer der Nuten 47 angeordnet ist.

Bei der dargestellten bevorzugten Ausführungsform der Erfindung werden die Spannelemente 48 um die der Formschale 37 zugewandte Wandungslängsseite 42 und die sich daran anschließenden Wandungseckbereiche 43 sowie die beiden sich daran anschließenden Wandungslängsseiten 42 und die sich daran anschließenden Wandungseckbereiche 43 herum gespannt. Im Bereich der dem Spannelement-Halteteil 39 zugewandten Wandungslängsseite 42 kreuzen sich die Spannelemente 48 jeweils und werden mit ihren freien Spannelementenden 48a jeweils in einen der Spannelementaufnahmeschlitze 56 eingespannt, insbesondere eingeklemmt.

Mittels der Spannelemente 48 ist das Flächengebilde 20 somit einerseits an der inneren Form 36 fixiert. Zudem stellen die Spannelemente 48 sicher, dass das Flächengebilde 21 auch vollflächig an der Abformungsoberfläche 44 an- liegt.

Alternativ oder zusätzlich können die Spannelemente 48 mittels Seilzügen oder einer anderen Spannvorrichtung gespannt werden. Dazu können die Spannelemente 48 jeweils in ihren Endbereichen mit Seilzügen oder anderen Spannvorrichtungen verbunden sein, mit denen sich die Spannelemente 48 gegen die Abformungsoberfläche 44 spannen lassen. Die erforderliche Spannkraft kann mit mechanischen, elektrischen, hydraulischen, pneumatischen Mitteln oder einer sonstigen Beaufschlagung erreicht werden.

Anschließend wird die äußere Formschale 37 so auf die innere Form 36 zugefahren, dass das Flächengebilde 20 formschlüssig dazwischen angeordnet ist. Insbesondere liegt die der äußeren Formschale 37 zugewandte Oberseite des Flächengebildes 20 an der Gegenabformungsoberfläche 49 an.

Zumindest wenn die Polymerbeschichtung 22 noch nicht ausgehärtet und insbesondere vulkanisiert ist, wird zumindest eine der beiden Formen 36;37 mit Wärme beaufschlagt, so dass die Polymerbeschichtung 22 aushärtet, vor- zugsweise vulkanisiert wird.

Zum Beheizen der Formen 36;37 können diese z. B. in eine Wärmekammer, einen Autoklav oder einen Ofen überführt werden.

Alternativ können in die Formen 36;37 oder die Profilteile Wärmeleitungen oder Heizmatten eingebracht sein.

Ferner kann das Aushärten, vorzugsweise Vulkanisieren, der Polymerbeschichtung 22 und/oder das Aushärten der Spannelemente 48 durch Beaufschlagung mit UV- oder IR-Strahlung oder Heißluft oder durch ein Induktionsverfahren durch Beaufschlagen mit einem elektromagnetischen Feld erfolgen. Das Flächengebilde 20 kann dabei zunächst lediglich von der Außenseite mit UV-oder IR-Strahlung bzw. Heißluft bzw. einem elektromagnetischen Feld beaufschlagt werden, wodurch die Polymerbeschichtung 22 bzw. die Spannelemente 48 ganz oder zumindest teilweise aushärten. Wenn es gewünscht ist, kann das Flächengebilde 20 danach aus den Formen 36;37 entnommen und weiter mit UV- oder IR-Strahlung bzw. Heißluft bzw. einem elektromagnetischen Feld beaufschlagt werden für ein vollständiges Aushärten. Es ist auch möglich, die Formen 36;37 so auszulegen, dass die UV- oder IR-Strahlung bzw. die Heißluft bzw. das elektromagnetische Feld durch diese hindurch zu dem Flächengebilde 20 gelangen kann. Z. B. können die Formen 36;37 da- zu mit Löchern versehen sein. Ferner kann die Form 36 aus Glas gefertigt sein, welches für IR-Strahlung transparent ist, so dass die UV- oder IR- Strahlung bzw. das elektromagnetische Feld durch die Form 36 hindurch zu dem gegen die Abformungsoberfläche 44 gespannten Flächengebilde 20 gelangt.

Durch das Aushärten der Polymerbeschichtung 22 wird das Flächengebilde 20 in seiner Grundform fixiert. Im vorliegenden Fall weist das Flächengebilde 20 nach dem Aushärten eine Wellenkontur 15 mit zwei Wellen 16 auf. Zudem ist es U-förmig ausgebildet und weist zwei Abdeckungswandeckbereiche 9 auf. Das ausgehärtete Flächengebilde 20 bildet somit einen Abdeckungswandungsabschnitt 4c einer herzustellenden Abdeckungswandung 4.

In der Grundform fixiert, meint dabei, dass das Flächengebilde 20 ohne äußere Belastung seine Grundform behält. Selbstverständlich kann sich das Flächengebilde 20 im Einsatz als Abdeckungswandung 4, insbesondere elastisch, reversibel verformen, um Relativbewegungen von Bauteilen, die durch den die Abdeckung 1, insbesondere den Balg verbunden sind, zu folgen. Die Grundform, also die Wellen- oder Faltenkontur 15;11 bleibt dabei aber im Wesentlichen beibehalten.

Gleichzeitig zum Flächengebilde 20 härten durch die Beaufschlagung mit Wärme auch vorteilhafterweise die Spannelemente 48 aus und werden formstabil.

Danach wird das erhärtete Flächengebilde 20 mit den erhärteten Spannelementen 48 aus der Formvorrichtung 35 entnommen. Die überstehenden, nicht benötigten Bereiche der Spannelemente 48 werden vorzugsweise abgetrennt.

Optional kann sich daran ein Schritt der Versiegelung bzw. des Abdichtens anschließen, z. B. um etwaige verbleibende Öffnungen zu den Kanälen 23 zu verschließen.

Das ausgehärtete Flächengebilde 20 und die erhärteten Spannelemente 48 bilden somit einen Abdeckungs-, insbesondere Balgabschnitt, einer herzustellenden Abdeckung 1, insbesondere eines herzustellenden Balgs. Das formstabile Flächengebilde 20 bildet einen Abdeckungswandungsabschnitt 4c, insbesondere einen Balgwandungsabschnitt, der Abdeckungswandung 4, insbesondere der Balgwandung 4, und die erhärteten, formstabilen Spannelemente 48 bilden die Abdeckungsspannrahmen 3, insbesondere die Balgspannrahmen, oder zumindest einen Teil davon.

Mehrere derart hergestellte Abdeckungsabschnitte können dann zu einer Abdeckungshälfte oder zu einer gesamten Abdeckung 1 zusammengesetzt werden. Insbesondere können mehrere derart hergestellte Balgabschnitte zu einer u-förmigen Balghälfte oder zu einem ganzen Balg zusammengesetzt werden. Insbesondere können die Abdeckungswandungsabschnitte 4c dazu entsprechend miteinander vernäht und/oder verschweißt und/oder verklebt und/oder mittels Rahmen verbunden werden. Die Spannelemente 48 müssen dabei nicht zwingend miteinander verbunden werden. Es reicht, wenn die Abdeckungswandungsabschnitte 4c miteinander verbunden werden. Im Bedarfsfall können die Spannelemente 48 aber z. B. mit Hilfe von Übersetzprofilen miteinander verbunden werden.

Besonders vorteilhaft ist, dass die Spannelemente 48 bereits in die Abdeckungswandungsabschnitte 4c integriert sind. Eine nachträgliche Montage ist somit nicht mehr notwendig. Da die Spannelemente 48 zunächst flexibel bzw. schlaff bzw. biegeweich sind, können zudem problemlos auch Abdeckungswandungsabschnitte 4c mit Abdeckungswandeckbereichen 9 in einem Arbeitsgang hergestellt werden.

Insbesondere können mittels des erfindungsgemäßen Verfahrens auch ringförmige Abdeckungswandungsabschnitte 4c in einem Formgebungsschritt hergestellt werden. Dazu wird vorzugsweise ein einziges Flächengebilde 20 um die gesamte innere Form 36 herum drapiert, wobei sich vorzugsweise Randbereiche des Flächengebildes 20 überlappen, so dass ein geschlossener Ring erzeugt wird. Die Verbindung der Randbereiche des Flächengebildes 20 kann dabei durch die Vulkanisation der Polymerbeschichtung 22 erfolgen. Vorzugsweise erfolgt die Verbindung der Randbereiche des Flächengebildes 20 - zumindest in einem Bereich zwischen benachbarten Kanälen 23 - bereits bevor das Flächengebilde 20 auf die Form 36 drapiert wird. Beispielsweise können die Randbereiche miteinander vernäht werden.

Dabei kann eine einzige äußere Formschale 37 verwendet werden und einzelne Abschnitte des Flächengebildes 20 nacheinander erwärmt und ausgehärtet werden oder es können mehrere äußere Formschalen 37 verwendet werden und das gesamte Flächengebilde 20 in einem Arbeitsgang erwärmt und ausgehärtet werden.

Auf diese Weise kann mittels des erfindungsgemäßen Verfahrens auch eine gesamte Abdeckung 1, insbesondere ein ganzer Balg, mit einer geschlossenen, umlaufenden Abdeckungswandung 4 in einem Formgebungsschritt hergestellt werden, ohne dass Abdeckungsabschnitte nachträglich miteinander verbunden werden müssen. Dazu weisen die Formen 36;37 entsprechende Abformungsoberflächen 44;49 z. B. mit der entsprechenden Anzahl an gewölbten bzw. rinnenartigen Formgebungsabschnitten 45;50 auf. Die Abdeckungswandung 4 besteht dabei aus einem einzigen Abdeckungswandungsabschnitt 4c, wobei dieser aus einem oder mehreren Flächengebilden 20 bestehen kann:
Es können nämlich auch anstelle eines einzigen Flächengebildes 20 mehrere Flächengebilde 20 mit ihren Randbereichen überlappend um einen Teil oder die gesamte innere Form 36 herum drapiert werden und dadurch, z. B. U- förmige oder ringförmige Abdeckungswandungsabschnitte 4c in einem Arbeitsgang hergestellt werden. Auch können mehrere Flächengebilde 20 in vertikaler Richtung benachbart zueinander und überlappend drapiert werden. Dabei kann sich ein Spannelement 48 beispielsweise durch mehrere benachbart angeordnete Flächengebilde 20 erstrecken. Die mehreren Flächengebilde 20 können sich dabei u. a. in dem verwendeten Textil, der verwendeten Polymer- beschichtung und/oder in dem Vulkanisiationsgrad unterscheiden.

Gemäß einer weiteren Ausführungsform des erfindungsgemäßen Verfahrens werden die Spannelemente 48 nicht in Kanälen 23 des Festigkeitsträgers 21 angeordnet, sondern außen um das auf der inneren Form 36 drapierte Flächengebilde 20 herum gespannt. Auch in diesem Fall wird sichergestellt, dass das Flächengebilde 20 vollflächig an der Abformungsoberfläche 44 anliegt die Wellenkontur 16 oder Faltenkontur 11 exakt ausgebildet werden. Die Spannelemente 48 werden nach dem Formvorgang entfernt. Es wird somit lediglich ein Abdeckungswandungsabschnitt 4c ohne Abdeckungsspannrahmenelemente hergestellt.

Und gemäß einer weiteren Ausführungsform der Erfindung werden beim Aushärte- und Formvorgang lediglich die Spannelemente 48 ausgehärtet und in ihrer Form fixiert. Die Polymerbeschichtung(en) des Flächengebildes 20 ist bzw. sind bereits ausgehärtet, insbesondere vulkanisiert. Die Fixierung der Form des Abdeckungswandungsabschnitts 4c erfolgt somit aufgrund der Fixierung der Spannelemente 48 in ihrer Form. In diesem Fall werden die Spannelemente 48 wie gemäß der ersten Ausführungsform beschrieben in Kanälen 23 des Festigkeitsträgers 21 positioniert.

Vorteil des erfindungsgemäßen Verfahrens ist somit insbesondere die qualitativ hochwertige Ausformung der Abdeckungswandung 4 bzw. Abdeckungs- wandungsabschnitte 4c, was durch die Verwendung der Spannelemente 48 sichergestellt wird.

Werden die Spannelemente 48 in den Kanälen 23 angeordnet und mit ausgehärtet, sind in einem Arbeitsgang Abdeckungswandungsabschnitte 4c mit Abdeckungsspannrahmenelementen bzw. eine gesamte Abdeckungswandung 4 mit Abdeckungsspannrahmen 3 einer Abdeckung 1, insbesondere eines Balgs, herstellbar.

Der erfindungsgemäße Balg wird gemäß einer ersten Ausführungsform der Erfindung für einen Übergang 58 verwendet, an dem zwei Fahrzeugteile 59a;b eines Fahrzeugs 60 relativ zueinander beweglich, insbesondere, gelenkig miteinander verbunden sind, um den Übergang 58 vor Wetter und Zugluft zu schützen. Bei dem Fahrzeug 60 handelt es sich vorzugsweise um einen Gelenkbus 61 oder ein Schienenfahrzeug, insbesondere einen Reisezug, eine Straßenbahn, eine Metro oder U-Bahn. Die beiden Fahrzeugteile 59a;b sind insbesondere um eine vertikale Drehachse relativ zueinander verdrehbar und/oder in Fahrtrichtung relativ zueinander verschieblich und/oder quer zur Fahrtrichtung verschieblich und/oder um eine Längsachse des Fahrzeugs (Wanken) drehbar miteinander verbunden.

Bei dem erfindungsgemäßen Balg handelt es sich gemäß einer weiteren Ausführungsform der Erfindung um einen Übergangsbalg zum Schutz des Übergangs einer Fluggastbrücke oder -treppe zum Flugzeug und/oder zum Terminal.

Oder es handelt sich bei dem erfindungsgemäßen Balg gemäß einer weiteren Ausführungsform der Erfindung um einen Übergangsbalg zum Schutz des Übergangs zwischen zwei Gebäudeteilen, beispielsweise zum Schutz des Übergangs zwischen einer Brücke und einem Gebäudeabschnitt.

Der Balg kann aus mehreren flächigen Balgelementen (nicht dargestellt) ausgebildet sein, welche jeweils zwei gerade Spannrahmenelemente aufweisen, zwischen denen ein Flächengebilde 20 eingespannt ist.

Zusammenfassend handelt es sich bei der erfindungsgemäßen Abdeckung 1 somit um ein, bevorzugt flächenförmiges oder im Querschnitt rechteckig oder im Querschnitt U-förmig ausgebildetes, Übergangselement, bevorzugt einen Übergangsbalg, für Fahrzeuge, Gebäudeverbindungen oder für Fluggastbrücken oder -treppen, wobei das Übergangselement, bevorzugt der Übergangsbalg, zum Schutz eines Übergangs von zwei relativ zueinander beweglich miteinander verbundenen Fahrzeugteilen oder von zwei Gebäudeteilen oder eines Flugzeuges oder eines Gebäudes mit einer Fluggastbrücke, insbesondere von zwei gelenkig miteinander verbundenen Fahrzeugteilen, vor äußeren Einflüssen dient. Dabei ist jeder der vorgenannten Verwendungen für sich genommen eine erfindungsgemäße Verwendung.

Demnach betrifft die Erfindung auch ein Fahrzeug 60, insbesondere ein Schienenfahrzeug oder einen Gelenkbus 61, aufweisend zumindest zwei an einem Übergang 58 relativ zueinander beweglich miteinander verbundene, bevorzugt miteinander gelenkig verbundene, Fahrzeugteile 59a;b, wobei das Fahrzeug 60 pro Übergang 58 zumindest ein den Übergang 58 schützendes erfindungsgemäßes Übergangselement, vorzugsweise einen Übergangsbalg, insbesondere einen Falten- oder Wellenbalg 1;10, aufweist.

Zudem betrifft die Erfindung eine Fluggastbrücke oder -treppe, wobei die Fluggastbrücke oder -treppe zumindest ein erfindungsgemäßes Übergangselement, vorzugsweise einen Übergangsbalg, bevorzugt einen Falten- oder Wellenbalg 1; 10 aufweist.

Auch betrifft die Erfindung eine Gebäudeverbindung aufweisend zwei an einem Übergang miteinander verbundene Gebäudeteile, wobei die Gebäudeverbindung zumindest ein erfindungsgemäßes Übergangselement, vorzugsweise einen Übergangsbalg, bevorzugt einen Falten- oder Wellenbalg 1; 10 zum Schutz des Übergangs der beiden Gebäudeteile aufweist.

Wie bereits erläutert, liegt es zudem im Rahmen der Erfindung, dass der Festigkeitsträger 21 mehrschichtig ausgebildet ist und aus mehreren textilen Flächengebilden besteht, die jeweils miteinander mittels einer Haftschicht aus einem Polymer verbunden sind. Auch kann zwischen der Polymerbeschichtung 22 und dem Festigkeitsträger 21 auch eine Haftschicht aus einem Polymer vorhanden sein. Infolgedessen liegt es auch im Rahmen der Erfindung, dass auch oder nur die Haftschichten erst während des Erwärmens des Flächengebildes 20 aushärten. Es kommt nur darauf an, dass das Flächengebilde 20 an sich durch Wärme aushärtbar ist. Dazu weist es mindestens eine wärmeaus- härtbare Polymerschicht auf.

Im Rahmen der Erfindung liegt es zudem auch, einen glatten bzw. ungewellten und keine Falten aufweisenden bzw. unkonturierten bzw. flächigen Abdeckungswandungsabschnitt 4c ohne Falten- oder Wellenkontur nur durch Aushärten der Spannelemente 48 herzustellen. In diesem Fall ist das Flächengebilde 20 entsprechend elastisch ausgebildet, vorzugsweise gemäß der DE 10 2011 107 370 A1. Die Erhärtung der Spannelemente 48 trägt dabei zur Formgebung und Versteifung bei, so dass die Abdeckung 1, insbesondere der Balg, ihre bzw. seine (Grund)Form beibehält und insbesondere auch gegenüber in Querrichtung bzw. Abdeckungsumfangsrichtung 2b (bzw. senkrecht zur Abdeckungslängsrichtung 2a) wirkenden Kräften weniger nachgiebig ist. Die Grundform kann zum Beispiel, wie oben beschrieben, flächig, rechteckig oder u-förmig sein.

Des Weiteren können die Falten 12 und Wellen 16 auch eine andere als die dargestellte Form aufweisen. Die Wellen 16 können z. B. eine Trapezform oder Rechteckform aufweisen.

## Patentansprüche

1. Formgebungsverfahren zur Herstellung eines Abdeckungswandungsabschnitts (4c) für eine Abdeckung (1), wobei es sich bei der Abdeckung (1) um ein, bevorzugt flächenförmiges oder im Querschnitt rechteckig oder im Querschnitt U-förmig ausgebildetes, Übergangselement, bevorzugt einen Übergangsbalg, für Fahrzeuge, Gebäudeverbindungen oder für Fluggastbrücken oder -treppen, handelt, wobei das Übergangselement, bevorzugt der Übergangsbalg, zum Schutz eines Übergangs von zwei relativ zueinander beweglich miteinander verbundenen Fahrzeugteilen oder von zwei Gebäudeteilen oder eines Flugzeuges oder eines Gebäudes mit einer Fluggastbrücke, insbesondere von zwei gelenkig miteinander verbundenen Fahrzeugteilen, vor äußeren Einflüssen dient, wobei der Abdeckungswandungsabschnitt (4c) zumindest ein mehrschichtiges Flächengebilde (20) aufweist, welches einen Festigkeitsträger (21) und zumindest einseitig, vorzugsweise beidseitig, eine Polymerbeschichtung (22) aufweist,
mit folgenden Verfahrensschritten:
a) Bereitstellen des zumindest einen mehrschichtigen Flächengebildes (20),
b) Drapieren des zumindest einen mehrschichtigen Flächengebildes (20) auf einer Abformungsoberfläche (44) einer Form (36) und Spannen des zumindest einen mehrschichtigen Flächengebildes (20) gegen die Abformungsoberfläche (44) mittels mindestens eines länglich ausgebildeten, biegeweichen, nicht formstabilen Spannelements (48),
c) Aushärten des zumindest einen mehrschichtigen Flächengebildes (20) und/oder des mindestens einen Spannelements (48) derart, dass der Abdeckungswandungsabschnitt (4c) in seiner Form fixiert wird.

2. Formgebungsverfahren nach Anspruch 1,
**dadurch gekennzeichnet, dass**
das zumindest eine mehrschichtige Flächengebilde (20) derart ausgehärtet und insbesondere erwärmt wird, dass es in seiner Form fixiert wird und/oder
das mindestens eine Spannelement (48) derart ausgehärtet und insbesondere erwärmt wird, dass es in seiner Form fixiert wird.

3. Formgebungsverfahren nach Anspruch 1 oder 2,
**dadurch gekennzeichnet, dass**
ein eine Falten- oder Wellenkontur (11;15) mit zumindest einer Falte (12) oder Welle (16) aufweisender Abdeckungswandungsabschnitt (4c) hergestellt wird,
die Abformungsoberfläche (44) zur Ausbildung der Falten- oder Wellenkontur (11;15) eine entsprechende Formgebungskontur aufweist,
das zumindest eine mehrschichtige Flächengebilde (20) so gegen die Abformungsoberfläche (44) mittels des mindestens einen Spannelements (48) gespannt wird, dass das zumindest eine mehrschichtige Flächengebilde (20) die Falten- oder Wellenkontur (11;15) aufweist, und
das zumindest eine mehrschichtige Flächengebilde (20) und/oder das mindestens eine Spannelement (48) derart ausgehärtet und insbesondere erwärmt wird, dass das zumindest eine mehrschichtige Flächengebilde (20) in seiner die Falten- oder Wellenkontur (11; 15) aufweisenden Form fixiert wird.

4. Verfahren nach Anspruch 2 oder 3,
**dadurch gekennzeichnet, dass**
das zumindest eine bereitgestellte mehrschichtige Flächengebilde (20) zumindest eine Polymerschicht aus einem wärmeaushärtbaren Polymer aufweist, wobei die zumindest eine Polymerschicht beim Erwärmen des Flächengebildes (20) ausgehärtet wird und dadurch das Flächengebilde (20) in seiner, insbesondere die Falten- oder Wellenkontur (11; 15) aufweisenden, Form fixiert wird, wobei optional eine oder beide Polymerbeschichtungen (22) aus dem wärmeaushärtbaren Polymer bestehen.

5. Verfahren nach einem der vorhergehenden Ansprüche,
**dadurch gekennzeichnet, dass**
das biegeweiche Spannelement (48) ein Spannseil oder ein Spannschlauch ist, wobei es sich bei dem Spannschlauch vorzugsweise um einen, insbesondere umflochtenen, Wellrohrschlauch handelt.

6. Verfahren nach einem der vorhergehenden Ansprüche,
**dadurch gekennzeichnet, dass**
das mindestens eine Spannelement (48) vor dem Aushärten und insbesondere Erwärmen biegeweich ist und beim Aushärten, z. B. durch Erwärmen, in seiner Form fixiert wird, wobei vorzugsweise das mehrschichtige Flächengebilde (20) in seiner die Falten- oder Wellenkontur (11; 15) aufweisenden Form fixiert wird durch Fixieren des mindestens einen Spannelements (48) in seiner Form,
wobei es sich vorzugsweise bei dem mindestens einen Spannelement (48) um
a) einen Spannschlauch, der mit einem wärmehärtbaren Material befüllt ist, welches beim Erwärmen des Spannschlauchs aushärtet, und/oder
b) ein Spannseil, das mit einem wärmehärtbaren Material getränkt ist, welches beim Erwärmen des Spannseils aushärtet,
handelt, wobei es sich bei dem wärmehärtbaren Material vorzugsweise um ein wärmehärtendes Polymer, bevorzugt um Epoxidharz und/oder Phenolharz und/oder ein thermoplatisches Polymer oder eine hochshorige Elastomermischung handelt.

7. Verfahren nach einem der vorhergehenden Ansprüche,
**dadurch gekennzeichnet, dass**
das mindestens eine längliche Spannelement (48), vorzugsweise vor dem Drapieren, in einem Kanal (23) des mehrschichtigen Flächengebildes (20), vorzugsweise des Festigkeitsträgers (21), angeordnet wird, wobei das mehrschichtige Flächengebilde (20) vorzugsweise
- einen Festigkeitsträger (21) mit einem Trägergewebe (24) aus Kettfäden (25) und Schussfäden (26) aufweist, wobei die Kett- und Schussfäden (25;26) derart miteinander verwebt sind, dass das Trägergewebe (24) sowohl einlagige Gewebebereiche (29) als auch zumindest einen zumindest zweilagigen Gewebebereich (30) mit zumindest zwei Gewebelagen (31a;b) aufweist, die nicht miteinander verbunden sind, so dass zwischen den Gewebelagen (31a;b) jeweils der Kanal (23) ausgebildet wird; und/oder
- einen Festigkeitsträger (21) aufweist, der zwei Flächengebilde aufweist, die derart miteinander verbunden sind, dass Führungen in Form von Schlaufen gebildet werden, welche jeweils den Kanal ausbilden, wobei die Flächengebilde vorzugsweise durch Vernähen, Verwirken, Verstricken, Verschweißen oder Verkleben miteinander verbunden sind und/oder die Flächengebilde jeweils zumindest ein textiles Flächengebilde aufweisen, wobei es sich bei dem textilen Flächengebilde bevorzugt jeweils um ein Gewebe oder Maschenware, insbesondere ein Gewirke oder ein Gestrick handelt; und/oder
- ein textiles Abstandsflächengebilde aus zwei durch Polfäden miteinander verbundenen textilen Flächengebilden aufweist, wobei die Polfäden die beiden textilen Flächengebilden auf Abstand halten, so dass zumindest ein Kanal ausgebildet wird, wobei es sich bei dem textilen Abstandsflächengebilde vorzugsweise um ein Abstandsgewebe oder Abstandsmaschenware, bevorzugt ein Abstandsgewirke oder ein Abstandsgestrick, handelt.

8. Verfahren nach einem der vorhergehenden Ansprüche,
**dadurch gekennzeichnet, dass**
das mindestens eine längliche Spannelement (48) zum Spannen des zumindest einen mehrschichtigen Flächengebildes (20) um die Abformungsoberfläche (44) herum gespannt wird, wobei vorzugsweise das Spannelement (48) bzw. im Fall von mehreren Spannelementen (48) zumindest ein Teil der Spannelemente (48) jeweils in einer rinnenartigen Vertiefung (46) der Abformungsoberfläche (44) angeordnet ist und/oder wobei vorzugsweise
im Bereich einer Vertiefung (46) jeweils ein Wellental (19) der Wellenkontur (15) oder eine Faltenkante (14b) der Faltenkontur (11) ausgebildet wird.

9. Verfahren nach einem der vorhergehenden Ansprüche,
**dadurch gekennzeichnet, dass**
a) mehrere mehrschichtige Flächengebilde (20) auf der Abformungsoberfläche (44) drapiert werden, wobei sich zueinander benachbarte mehrschichtige Flächengebilde (20) vorzugsweise mit ihren Randbereichen überlappen, wobei vorzugsweise die mehrschichtigen Flächengebilde (20) in den sich überlappenden Randbereichen durch das Aushärten der Polymerbeschichtungen (22) miteinander verbunden werden,
und/oder
b) in einem Formgebungsschritt ein ringförmiger Abdeckungswandungsabschnitt (4c) oder eine vollständige ringförmige Abdeckungswandung (4) aus einem einzigen oder mehreren mehrschichtigen Flächengebilden (20) hergestellt wird.

10. Verfahren nach einem der vorhergehenden Ansprüche,
**dadurch gekennzeichnet, dass**
- ein erster Bereich des zumindest einen mehrschichtigen Flächengebildes (20) gegen einen Bereich der Abformungsoberfläche (44) gespannt wird, in dem diese stark gekrümmt ist, und
- ein zweiter Bereich des zumindest einen mehrschichtigen Flächengebildes (20) gegen einen Bereich der Abformungsoberfläche (44) gespannt wird, in dem diese weniger stark gekrümmt ist,
wobei das mehrschichtige Flächengebilde (20) im Bereich des stärker gekrümmten Bereichs eine höhere Höchstzugkraft-Dehnung ε_{H} gemäß DIN EN ISO 13934-1:2013 aufweist als im weniger stark gekrümmten Bereich.

11. Verfahren nach einem der vorhergehenden Ansprüche,
**dadurch gekennzeichnet, dass**
a) eine Formschale (37) verwendet wird, die eine zur Abformungsoberfläche (44) korrespondierende Gegenabformungsoberfläche (49) aufweist, wobei die Formschale (37) vor dem Erwärmen so auf die innere Form (36) zu gefahren wird, dass das zumindest eine mehrschichtige Flächengebilde (20) formschlüssig dazwischen angeordnet ist und vorzugsweise eine der äußeren Formschale (37) zugewandte Oberseite des zumindest einen mehrschichtigen Flächengebildes (20) an der Gegenabformungsoberfläche (49) anliegt,
und/oder
b) das mindestens eine längliche Spannelement (48) außen um das auf der Form (36) drapierte mehrschichtige Flächengebilde (20) herum gespannt wird.

12. Abdeckung (1) mit einer, vorzugsweise eine Falten- oder Wellenkontur (11;15) aufweisenden, Abdeckungswandung (4), wobei es sich bei der Abdeckung (1) um ein, bevorzugt flächenförmiges oder im Querschnitt rechteckig oder im Querschnitt U-förmig ausgebildetes, Übergangselement, bevorzugt einen Übergangsbalg, für Fahrzeuge, Gebäudeverbindungen oder für Fluggastbrücken oder -treppen, handelt, wobei das Übergangselement, bevorzugt der Übergangsbalg, zum Schutz eines Übergangs von zwei relativ zueinander beweglich miteinander verbundenen Fahrzeugteilen oder von zwei Gebäudeteilen oder eines Flugzeuges oder eines Gebäudes mit einer Fluggastbrücke, insbesondere von zwei gelenkig miteinander verbundenen Fahrzeugteilen, vor äußeren Einflüssen dient, und wobei die Abdeckung (1) mindestens zwei Abdeckungsspannrahmen (3) aufweist und die Abdeckungswandung (4) in die Abdeckungsspannrahmen (3) eingespannt ist, und die Abdeckungsspannrahmen (3) jeweils in einem Kanal (23) der Abdeckungswandung (4) angeordnet sind,
**dadurch gekennzeichnet, dass**
die Abdeckungswandung (4) zumindest einen gemäß dem Verfahren gemäß einem der vorhergehenden Ansprüche hergestellten Abdeckungswandungsabschnitt (4c) aufweist und die ausgehärteten, formstabilen Spannelemente (48) die Abdeckungsspannrahmen (3) oder zumindest einen Teil davon bilden.

13. Abdeckung (1) nach Anspruch 12,
**dadurch gekennzeichnet, dass**
a) die Abdeckung (1) eine Faltenkontur (11) aufweist und die Faltenkontur (11) mehrere zueinander benachbarte Falten (12) aufweist, wobei die Falten (12) jeweils Faltenflanken (13) aufweisen, die jeweils paarweise über sich abwechselnde innere und äußere Faltenkanten (14a;b) ineinander übergehen und wobei die Abdeckungswandung (4) an zumindest einem Teil der Faltenkanten (14a;b) in einen Abdeckungsspannrahmen (3) eingespannt ist, wobei der Abdeckungsspannrahmen (3) aus zumindest einem ausgehärteten Spannelement (48) besteht, wobei optional sowohl in den inneren als auch in den äußeren Faltenkanten (14a;b) Kanäle (23) vorgesehen sind, in denen zumindest teilumfänglich Abdeckungsspannrahmen (3) in Form von ausgehärteten Spannelementen (48) angeordnet sind, oder
b) die Abdeckung (1) eine Wellenkontur (15) aufweist und die Wellenkontur (15) mehrere zueinander benachbarte, insbesondere U-förmige, Wellen (16) aufweist, die jeweils über eine Wellenkante (18) ineinander übergehen, wobei die Abdeckungswandung (4) an zumindest einem Teil der Wellenkanten (18) in einen Abdeckungsspannrahmen (3) eingespannt ist, wobei der Abdeckungsspannrahmen (3) aus zumindest einem ausgehärteten Spannelement (48) besteht.

14. Verfahren zur Herstellung einer Abdeckung (1) nach Anspruch 12 oder 13,
**dadurch gekennzeichnet, dass**
zumindest ein Abdeckungswandungsabschnitt (4c) der Abdeckungswandung (4) gemäß dem Verfahren gemäß einem der Ansprüche 1 bis 11 hergestellt wird.

15. Fahrzeug (60), insbesondere Schienenfahrzeug oder Gelenkbus (61), aufweisend zumindest zwei an einem Übergang (58) relativ zueinander beweglich miteinander verbundene, bevorzugt miteinander gelenkig verbundene, Fahrzeugteile (59a;b),
**dadurch gekennzeichnet, dass**
das Fahrzeug pro Übergang (58) zumindest ein den Übergang (58) schützendes Übergangselement, insbesondere einen Übergangsbalg, bevorzugt einen Falten- oder Wellenbalg (10), nach Anspruch 12 oder 13 aufweist.

16. Fluggastbrücke oder -treppe,
**dadurch gekennzeichnet, dass**
die Fluggastbrücke oder -treppe zumindest ein Übergangselement, vorzugsweise einen Übergangsbalg, bevorzugt einen Falten- oder Wellenbalg (10), nach Anspruch 12 oder 13 zum Schutz des Übergangs der Fluggastbrücke oder -treppe zum Flugzeug und/oder zum Terminal aufweist.

17. Gebäudeverbindung aufweisend zwei an einem Übergang miteinander verbundene Gebäudeteile,
**dadurch gekennzeichnet, dass**
die Gebäudeverbindung zumindest ein Übergangselement, vorzugsweise einen Übergangsbalg, bevorzugt einen Falten- oder Wellenbalg (10), nach Anspruch 12 oder 13 zum Schutz des Übergangs der beiden Gebäudeteile aufweist.

## Claims

1. Shaping method for producing a cover wall portion (4c) for a cover (1), wherein the cover (1) is a gangway element, preferably gangway bellows, for vehicles, building connections, or for air passenger bridges or air passenger stairs, and is preferably designed to be planar or to be rectangular in cross section or U-shaped in cross section, wherein the gangway element, preferably the gangway bellows, is used to protect a gangway between two vehicle parts which are connected to one another so as to be movable relative to one another, or between two building parts, or between an aircraft or a building and an air passenger bridge, in particular a gangway between two vehicle parts which are connected to one another in an articulated manner, against external influences, wherein the cover wall portion (4c) comprises at least one multilayer sheet material (20) which comprises a reinforcement material (21) and a polymer coating (22) which is provided on at least one side, preferably on both sides,
the shaping method comprising the following steps:
a) providing the at least one multilayer sheet material (20),
b) draping the at least one multilayer sheet material (20) on a molding surface (44) of a mold (36) and tensioning the at least one multilayer sheet material (20) against the molding surface (44) by means of at least one elongate, flexible, non-dimensionally stable tensioning element (48),
c) curing the at least one multilayer sheet material (20) and/or the at least one tensioning element (48) such that the cover wall portion (4c) is fixed in its shape.

2. Shaping method according to claim 1,
**characterized in that**
the at least one multilayer sheet material (20) is cured and in particular heated such that it is fixed in its shape, and/or
the at least one tensioning element (48) is cured and in particular heated such that it is fixed in its shape.

3. Shaping method according to claim 1 or claim 2,
**characterized in that**
a cover wall portion (4c) is produced which has a folded or corrugated contour (11; 15) having at least one fold (12) or corrugation (16),
the molding surface (44) has a corresponding shaping contour for forming the folded or corrugated contour (11; 15),
the at least one multilayer sheet material (20) is tensioned against the molding surface (44) by means of the at least one tensioning element (48) such that the at least one multilayer sheet material (20) has the folded or corrugated contour (11; 15), and the at least one multilayer sheet material (20) and/or the at least one tensioning element (48) is cured and in particular heated such that the at least one multilayer sheet material (20) is fixed in its shape which has the folded or corrugated contour (11; 15).

4. Method according to claim 2 or claim 3,
**characterized in that**
the at least one provided multilayer sheet material (20) comprises at least one polymer layer made of a thermosetting polymer, wherein the at least one polymer layer is cured when the sheet material (20) is heated, and the sheet material (20) is thereby fixed in its shape, which in particular has the folded or corrugated contour (11; 15), wherein optionally one or both polymer coatings (22) consist of the thermosetting polymer.

5. Method according to any of the preceding claims,
**characterized in that**
the flexible tensioning element (48) is a tensioning rope or a tensioning tube, wherein the tensioning tube is preferably a corrugated tube, in particular a braided corrugated tube.

6. Method according to any of the preceding claims,
**characterized in that**
the at least one tensioning element (48) is flexible before curing and in particular heating and is fixed in its shape when cured, e.g. by heating, wherein the multilayer sheet material (20) is preferably fixed in its shape, which has the folded or corrugated contour (11; 15), by fixing the at least one tensioning element (48) in its shape,
wherein the at least one tensioning element (48) is preferably
a) a tensioning tube filled with a thermosetting material which cures when the tensioning tube is heated,
and/or
b) a tensioning rope impregnated with a thermosetting material which cures when the tensioning rope is heated,
wherein the thermosetting material is preferably a thermosetting polymer, preferably epoxy resin and/or phenolic resin and/or a thermoplastic polymer or an elastomer mixture with a high Shore hardness.

7. Method according to any of the preceding claims,
**characterized in that,**
preferably before draping, the at least one elongate tensioning element (48) is arranged in a channel (23) of the multilayer sheet material (20), preferably of the reinforcement material (21),
wherein the multilayer sheet material (20) preferably comprises
- a reinforcement material (21) which has a woven reinforcement fabric (24) made of warp threads (25) and weft threads (26), wherein the warp and weft threads (25; 26) are woven together such that the woven reinforcement fabric (24) has both single-layer woven fabric regions (29) and at least one at least double-layer woven fabric region (30) having at least two woven fabric layers (31a; b) which are not connected to one another such that the channel (23) is formed between each of the woven fabric layers (31a; b); and/or
- a reinforcement material (21) which has two sheet materials which are connected to one another such that guides in the form of loops are formed, which guides each form the channel, wherein the sheet materials are preferably connected to one another by stitching, warp knitting, weft knitting, bonding or gluing, and/or the sheet materials each comprise at least one textile fabric, wherein the textile fabric is, in each case, preferably a woven or knitted fabric, in particular a warp knitted fabric or a weft knitted fabric; and/or
- a textile spacer fabric made of two textile fabrics connected to one another by pile threads, wherein the pile threads keep the two textile fabrics at a distance such that at least one channel is formed, wherein the textile spacer fabric is preferably a woven spacer fabric or knitted spacer fabric, preferably a warp knitted spacer fabric or a weft knitted spacer fabric.

8. Method according to any of the preceding claims,
**characterized in that**
the at least one elongate tensioning element (48) for tensioning the at least one multilayer sheet material (20) is tensioned around the molding surface (44), wherein the tensioning element (48) or, in the case of a plurality of tensioning elements (48), at least some of the tensioning elements (48) are preferably each arranged in a groove-like depression (46) in the molding surface (44), and/or wherein preferably
in the region of a depression (46), a corrugation trough (19) of the corrugated contour (15), or a fold edge (14b) of the folded contour (11) is formed.

9. Method according to any of the preceding claims,
**characterized in that**
a) a plurality of multilayer sheet materials (20) are draped on the molding surface (44), wherein adjacent multilayer sheet materials (20) preferably overlap in their edge regions, wherein the multilayer sheet materials (20) are preferably connected to one another in the overlapping edge regions by curing the polymer coatings (22),
and/or
b) in a shaping step, an annular cover wall portion (4c) or a complete annular cover wall (4) is produced from a single or a plurality of multilayer sheet materials (20).

10. Method according to any of the preceding claims,
**characterized in that**
- a first region of the at least one multilayer sheet material (20) is tensioned against a region of the molding surface (44) in which the molding surface is strongly curved, and
- a second region of the at least one multilayer sheet material (20) is tensioned against a region of the molding surface (44) in which the molding surface is less strongly curved,
wherein the multilayer sheet material (20) has a higher elongation at maximum force ε_{H}, according to DIN EN ISO 13934-1:2013, in the region of the more strongly curved region than in the less strongly curved region.

11. Method according to any of the preceding claims,
**characterized in that**
a) a mold shell (37) which has a counter-molding surface (49) corresponding to the molding surface (44) is used, wherein the mold shell (37) is moved toward the inner mold (36) before heating such that the at least one multilayer sheet material (20) is arranged in a form-fitting manner therebetween and a top side of the at least one multilayer sheet material (20), which faces the outer mold shell (37), preferably rests on the counter-molding surface (49),
and/or
b) the at least one elongate tensioning element (48) is tensioned on the outside around the multilayer sheet material (20) draped on the mold (36).

12. Cover (1) comprising a cover wall (4) which preferably has a folded or corrugated contour (11; 15), wherein the cover (1) is a gangway element, preferably gangway bellows, for vehicles, building connections, or for air passenger bridges or air passenger stairs, and is preferably designed to be planar or to be rectangular in cross section or U-shaped in cross section, wherein the gangway element, preferably the gangway bellows, is used to protect a gangway between two vehicle parts which are connected to one another so as to be movable relative to one another, or between two building parts, or between an aircraft or a building and an air passenger bridge, in particular a gangway between two vehicle parts which are connected to one another in an articulated manner, against external influences, and wherein the cover (1) comprises at least two cover tensioning frames (3), and the cover wall (4) is clamped into the cover tensioning frames (3), and the cover tensioning frames (3) are each arranged in a channel (23) of the cover wall (4),
**characterized in that**
the cover wall (4) comprises at least one cover wall portion (4c) produced according to the method according to any of the preceding claims, and the cured, dimensionally stable tensioning elements (48) form the cover tensioning frames (3) or at least a part thereof.

13. Cover (1) according to claim 12,
**characterized in that**
a) the cover (1) has a folded contour (11) and the folded contour (11) has a plurality of adjacent folds (12), wherein the folds (12) each have fold flanks (13) which each merge into one another in pairs via alternating inner and outer fold edges (14a;b), and wherein the cover wall (4) is clamped into a cover tensioning frame (3) at at least some of the fold edges (14a;b), wherein the cover tensioning frame (3) consists of at least one cured tensioning element (48), wherein channels (23) are optionally provided in both the inner and the outer fold edges (14a;b) in which cover tensioning frames (3) in the form of cured tensioning elements (48) are at least partially arranged,
or
b) the cover (1) has a corrugated contour (15), and the corrugated contour (15) has a plurality of adjacent, in particular U-shaped, corrugations (16) which each merge into one another via a corrugation edge (18), wherein the cover wall (4) is clamped into a cover tensioning frame (3) at at least some of the corrugation edges (18), wherein the cover tensioning frame (3) consists of at least one cured tensioning element (48).

14. Method for producing a cover (1) according to claim 12 or claim 13,
**characterized in that**
at least one cover wall portion (4c) of the cover wall (4) is produced according to the method according to any of claims 1 to 11.

15. Vehicle (60), in particular a rail vehicle or articulated bus (61), having at least two vehicle parts (59a;b) which are connected to one another at a gangway (58) so as to be movable relative to one another, and are preferably connected to one another in an articulated manner,
**characterized in that,**
for each gangway (58), the vehicle has at least one gangway element according to claim 12 or claim 13, in particular gangway bellows, preferably folding or corrugated bellows (10), which protects the gangway (58).

16. Air passenger bridge or air passenger stairs,
**characterized in that**
the air passenger bridge or air passenger stairs have at least one gangway element according to claim 12 or claim 13, preferably gangway bellows, preferably folding or corrugated bellows (10), for protecting the gangway of the air passenger bridge or air passenger stairs to the aircraft and/or to the terminal.

17. Building connection having two building parts connected to each other at a gangway,
**characterized in that**
the building connection has at least one gangway element according to claim 12 or claim 13, preferably gangway bellows, preferably folding or corrugated bellows (10), for protecting the gangway of the two building parts.

## Revendications

1. Procédé de moulage pour la fabrication d'une section de paroi d'élément de recouvrement (4c) pour un élément de recouvrement (1), l'élément de recouvrement (1) étant un élément d'intercirculation, de préférence un soufflet d'intercirculation, de préférence de forme plane ou rectangulaire en section transversale ou en forme de U en section transversale, pour des véhicules, des liaisons entre bâtiments ou pour des passerelles ou des escaliers d'embarquement, l'élément d'intercirculation, de préférence le soufflet d'intercirculation, servant à protéger des influences extérieures une intercirculation de deux parties de véhicule reliées entre elles de manière mobile l'une par rapport à l'autre ou de deux parties de bâtiment ou d'un aéronef ou d'un bâtiment avec une passerelle d'embarquement, en particulier de deux parties de véhicule reliées entre elles de manière articulée, la section de paroi d'élément de recouvrement (4c) présentant au moins une structure plane multicouche (20) qui présente un support de renforcement (21) et, au moins d'un côté, de préférence des deux côtés, un revêtement polymère (22),
le procédé de moulage comportant les étapes suivantes :
a) fourniture de l'au moins une structure plane multicouche (20),
b) drapage de l'au moins une structure plane multicouche (20) sur une surface de moulage (44) d'un moule (36) et serrage de l'au moins une structure plane multicouche (20) contre la surface de moulage (44) par le biais d'au moins un élément de serrage (48) de forme allongée, souple en flexion et dépourvu de stabilité de forme,
c) durcissement de l'au moins une structure plane multicouche (20) et/ou de l'au moins un élément de serrage (48) de telle sorte que la section de paroi d'élément de recouvrement (4c) est fixée dans sa forme.

2. Procédé de moulage selon la revendication 1,
**caractérisé en ce que**
l'au moins une structure plane multicouche (20) est durcie et en particulier chauffée de telle sorte qu'elle est fixée dans sa forme et/ou
l'au moins un élément de serrage (48) est durci et en particulier chauffé de telle sorte qu'il est fixé dans sa forme.

3. Procédé de moulage selon la revendication 1 ou 2,
**caractérisé en ce**
**qu**'une section de paroi d'élément de recouvrement (4c) présentant un contour plissé ou ondulé (11 ; 15) comportant au moins un pli (12) ou une ondulation (16) est fabriquée,
la surface de moulage (44) présente un contour de moulage correspondant pour la formation du contour plissé ou ondulé (11 ; 15),
l'au moins une structure plane multicouche (20) est serrée contre la surface de moulage (44) par le biais de l'au moins un élément de serrage (48) de telle sorte que l'au moins une structure plane multicouche (20) présente le contour plissé ou ondulé (11 ; 15), et l'au moins une structure plane multicouche (20) et/ou l'au moins un élément de serrage (48) sont durcis et en particulier chauffés de telle sorte que l'au moins une structure plane multicouche (20) est fixée dans sa forme présentant le contour plissé ou ondulé (11 ; 15).

4. Procédé selon la revendication 2 ou 3,
**caractérisé en ce que**
l'au moins une structure plane multicouche (20) fournie présente au moins une couche polymère en un polymère thermodurcissable, l'au moins une couche polymère étant durcie lors du chauffage de la structure plane (20) et la structure plane (20) étant ainsi fixée dans sa forme présentant en particulier le contour plissé ou ondulé (11 ; 15), l'un des revêtements polymères (22) ou les deux revêtements polymères étant éventuellement constitués du polymère thermodurcissable.

5. Procédé selon l'une des revendications précédentes,
**caractérisé en ce que**
l'élément de serrage (48) souple en flexion est un câble tendeur ou un tuyau flexible de serrage, le tuyau flexible de serrage étant de préférence un tuyau flexible ondulé, en particulier tressé.

6. Procédé selon l'une des revendications précédentes,
**caractérisé en ce que**
l'au moins un élément de serrage (48) est souple à la flexion avant le durcissement et en particulier le chauffage et est fixé dans sa forme lors du durcissement, par exemple par chauffage, la structure plane multicouche (20) étant de préférence fixée dans sa forme présentant le contour plissé ou ondulé (11 ; 15) par fixation de l'au moins un élément de serrage (48) dans sa forme,
l'au moins un élément de serrage (48) étant de préférence
a) un tuyau flexible de serrage qui est rempli d'un matériau thermodurcissable qui durcit lors du chauffage du tuyau flexible de serrage,
et/ou
b) un câble tendeur qui est imprégné d'un matériau thermodurcissable qui durcit lors du chauffage du câble tendeur,
le matériau thermodurcissable étant de préférence un polymère thermodurcissable, de préférence une résine époxy et/ou une résine phénolique et/ou un polymère thermoplastique ou un mélange élastomère à haute dureté Shore.

7. Procédé selon l'une des revendications précédentes,
**caractérisé en ce que**
l'au moins un élément de serrage (48) allongé est disposé, de préférence avant le drapage, dans un canal (23) de la structure plane multicouche (20), de préférence du support de renforcement (21),
la structure plane multicouche (20), de préférence,
- présentant un support de renforcement (21) comportant un tissu porteur (24) composé de fils de chaîne (25) et de fils de trame (26), les fils de chaîne et de trame (25 ; 26) étant tissés ensemble de telle sorte que le tissu porteur (24) présente aussi bien des zones de tissu (29) à une couche qu'au moins une zone de tissu (30) à au moins deux couches comportant au moins deux couches de tissu (31a ; b) qui ne sont pas reliées entre elles, de sorte que le canal (23) est respectivement formé entre les couches de tissu (31a ; b) ; et/ou
- présentant un support de renforcement (21) qui présente deux structures planes qui sont reliées entre elles de telle sorte que des guidages sous forme de boucles sont formés, lesquels forment respectivement le canal, les structures planes étant de préférence reliées entre elles par couture, maillage, tricotage, soudage ou collage et/ou les structures planes présentant respectivement au moins une structure textile plane, la structure textile plane étant de préférence respectivement un tissu ou un article maillé, en particulier un tissu à mailles ou un tissu tricoté ; et/ou
- présentant une structure textile plane d'espacement constituée de deux structures textiles planes reliées entre elles par des fils de poil, les fils de poil maintenant les deux structures textiles planes à distance, de sorte qu'au moins un canal est formé, la structure textile plane d'espacement étant de préférence un tissu d'espacement ou un article maillé d'espacement, de préférence un tissu d'espacement à mailles ou un tissu d'espacement tricoté.

8. Procédé selon l'une des revendications précédentes,
**caractérisé en ce que**
l'au moins un élément de serrage (48) allongé est serré autour de la surface de moulage (44) pour serrer l'au moins une structure plane multicouche (20), l'élément de serrage (48) ou, dans le cas de plusieurs éléments de serrage (48), au moins une partie des éléments de serrage (48) étant de préférence disposés respectivement dans un évidement (46) en forme de gouttière de la surface de moulage (44) et/ou
respectivement un creux d'ondulation (19) du contour ondulé (15) ou une arête de pli (14b) du contour plissé (11) étant de préférence formé dans la zone d'un évidement (46).

9. Procédé selon l'une des revendications précédentes,
**caractérisé en ce que**
a) plusieurs structures planes multicouche (20) sont drapées sur la surface de moulage (44), des structures planes multicouche (20) voisines les unes des autres se chevauchant de préférence par leurs zones de bord, les structures planes multicouche (20) étant de préférence reliées entre elles dans les zones de bord se chevauchant par le durcissement des revêtements polymères (22), et/ou
b) dans une étape de moulage, une section de paroi d'élément de recouvrement (4c) annulaire ou une paroi d'élément de recouvrement (4) annulaire complète est fabriquée à partir d'une seule ou de plusieurs structures planes multicouche (20).

10. Procédé selon l'une des revendications précédentes,
**caractérisé en ce que**
- une première zone de l'au moins une structure plane multicouche (20) est serrée contre une zone de la surface de moulage (44) dans laquelle celle-ci est fortement incurvée, et
- une seconde zone de l'au moins une structure plane multicouche (20) est serrée contre une zone de la surface de moulage (44) dans laquelle celle-ci est moins fortement incurvée,
la structure plane multicouche (20) présentant, dans la région de la zone plus fortement incurvée, un allongement à la force de traction maximale ε_{H} selon la norme DIN EN ISO 13934-1:2013 plus élevé que dans la zone moins fortement incurvée.

11. Procédé selon l'une des revendications précédentes,
**caractérisé en ce que**
a) une coquille de moule (37) qui présente une surface de contre-moulage (49) correspondant à la surface de moulage (44) est utilisée, la coquille de moule (37) étant déplacée vers le moule intérieur (36) avant le chauffage de telle sorte que l'au moins une structure plane multicouche (20) est disposée entre eux par complémentarité de forme et de préférence une face supérieure, tournée vers la coquille de moule extérieure (37), de l'au moins une structure plane multicouche (20) s'appuyant contre la surface de contre-moulage (49),
et/ou
b) l'au moins un élément de serrage (48) allongé est serré extérieurement autour de la structure plane multicouche (20) drapée sur le moule (36).

12. Élément de recouvrement (1) comportant une paroi d'élément de recouvrement (4), de préférence présentant un contour plissé ou ondulé (11 ; 15), l'élément de recouvrement (1) étant un élément d'intercirculation, de préférence un soufflet d'intercirculation, de préférence de forme plane ou rectangulaire en section transversale ou en forme de U en section transversale, pour des véhicules, des liaisons entre bâtiments ou pour des passerelles ou des escaliers d'embarquement, l'élément d'intercirculation, de préférence le soufflet d'intercirculation, servant à protéger des influences extérieures une intercirculation de deux parties de véhicule reliées entre elles de manière mobile l'une par rapport à l'autre ou de deux parties de bâtiment ou d'un aéronef ou d'un bâtiment avec une passerelle d'embarquement, en particulier de deux parties de véhicule reliées entre elles de manière articulée, et l'élément de recouvrement (1) présentant au moins deux cadres de serrage d'élément de recouvrement (3) et la paroi d'élément de recouvrement (4) étant serrée dans les cadres de serrage d'élément de recouvrement (3), et les cadres de serrage d'élément de recouvrement (3) étant disposés respectivement dans un canal (23) de la paroi d'élément de recouvrement (4),
**caractérisé en ce que**
la paroi d'élément de recouvrement (4) présente au moins une section de paroi d'élément de recouvrement (4c) fabriquée selon le procédé selon l'une des revendications précédentes et les éléments de serrage (48) durcis et à stabilité de forme forment les cadres de serrage d'élément de recouvrement (3) ou au moins une partie de ceux-ci.

13. Élément de recouvrement (1) selon la revendication 12,
**caractérisé en ce que**
a) l'élément de recouvrement (1) présente un contour plissé (11) et le contour plissé (11) présente plusieurs plis (12) voisins les uns des autres, les plis (12) présentant respectivement des flancs de plis (13) qui se prolongent respectivement les uns dans les autres par paires par l'intermédiaire d'arêtes de plis (14a ; b) intérieures et extérieures alternées, et la paroi d'élément de recouvrement (4) étant serrée dans un cadre de serrage d'élément de recouvrement (3) au niveau d'au moins une partie des arêtes de plis (14a ; b), le cadre de serrage d'élément de recouvrement (3) étant constitué d'au moins un élément de serrage (48) durci, des canaux (23) étant prévus éventuellement aussi bien dans les arêtes de plis intérieures que dans les arêtes de plis extérieures (14a ; b), canaux dans lesquels sont disposés, au moins sur une partie de leur circonférence, des cadres de serrage d'élément de recouvrement (3) sous forme d'éléments de serrage (48) durcis,
ou
b) l'élément de recouvrement (1) présente un contour ondulé (15) et le contour ondulé (15) présente plusieurs ondulations (16) voisines les unes des autres, en particulier en forme de U, qui se prolongent les unes dans les autres respectivement par l'intermédiaire d'une arête d'ondulation (18), la paroi d'élément de recouvrement (4) étant serrée dans un cadre de serrage d'élément de recouvrement (3) au niveau d'au moins une partie des arêtes d'ondulation (18), le cadre de serrage d'élément de recouvrement (3) étant constitué d'au moins un élément de serrage (48) durci.

14. Procédé pour la fabrication d'un élément de recouvrement (1) selon la revendication 12 ou 13,
**caractérisé en ce**
**qu**'au moins une section de paroi d'élément de recouvrement (4c) de la paroi d'élément de recouvrement (4) est fabriquée selon le procédé selon l'une des revendications 1 à 11.

15. Véhicule (60), en particulier véhicule ferroviaire ou bus articulé (61), présentant au moins deux parties de véhicule (59a ; b) reliées entre elles de manière mobile les unes par rapport aux autres, de préférence reliées entre elles de manière articulée, au niveau d'une intercirculation (58),
**caractérisé en ce que**
le véhicule présente, pour chaque intercirculation (58), au moins un élément d'intercirculation protégeant l'intercirculation (58), en particulier un soufflet d'intercirculation, de préférence un soufflet plissé ou ondulé (10), selon la revendication 12 ou 13.

16. Passerelle ou escalier d'embarquement,
**caractérisé en ce que**
la passerelle ou l'escalier d'embarquement présente au moins un élément d'intercirculation, de préférence un soufflet d'intercirculation, de préférence un soufflet plissé ou ondulé (10), selon la revendication 12 ou 13, pour la protection de l'intercirculation de la passerelle ou de l'escalier d'embarquement vers l'aéronef et/ou vers le terminal.

17. Liaison entre bâtiments présentant deux parties de bâtiment reliées entre elles au niveau d'une intercirculation,
**caractérisée en ce que**
la liaison entre bâtiments présente au moins un élément d'intercirculation, de préférence un soufflet d'intercirculation, de préférence un soufflet plissé ou ondulé (10), selon la revendication 12 ou 13 pour la protection de l'intercirculation des deux parties de bâtiment.
